(19) Europäisches Patentamt
European Patent Office
Office européen des brevets

(11) **EP 3 331 699 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(21) Anmeldenummer: **16754227.3**

(22) Anmeldetag: **03.08.2016**

(51) Int Cl.:
*B32B 7/12* (2006.01)   *B32B 7/06* (2019.01)
*B32B 15/08* (2006.01)   *B32B 15/20* (2006.01)
*B32B 27/28* (2006.01)   *B32B 27/30* (2006.01)
*B32B 27/32* (2006.01)   *B32B 27/36* (2006.01)
*B32B 27/40* (2006.01)   *B32B 3/10* (2006.01)

(86) Internationale Anmeldenummer:
**PCT/EP2016/068571**

(87) Internationale Veröffentlichungsnummer:
**WO 2017/021461 (09.02.2017 Gazette 2017/06)**

(54) **VERFAHREN UND VORRICHTUNG ZUM HERSTELLEN EINER MEHRSCHICHTFOLIE**

METHOD AND DEVICE FOR PRODUCING A MULTILAYER FILM

PROCÉDÉ ET DISPOSITIF DE FABRICATION D'UNE FEUILLE MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2015 DE 102015112909**

(43) Veröffentlichungstag der Anmeldung:
**13.06.2018 Patentblatt 2018/24**

(73) Patentinhaber: **Leonhard Kurz Stiftung & Co. KG
90763 Fürth (DE)**

(72) Erfinder: **REUTHER, Uwe
90441 Nürnberg (DE)**

(74) Vertreter: **Louis Pöhlau Lohrentz
Patentanwälte
Postfach 30 55
90014 Nürnberg (DE)**

(56) Entgegenhaltungen:
**EP-A1- 2 163 394      WO-A2-2007/048563
DE-A1- 10 013 410**

**Beschreibung**

Die Erfindung betrifft ein Verfahren zum Herstellen einer Mehrschichtfolie.

Mehrschichtfolien finden vielfältige Anwendung bei der sogenannten "trockenen Lackierung" oder Beschichtung, insbesondere Dekoration von Objekten, bei der Herstellung von Sicherheitselementen und dergleichen. Meist werden sie in Form von Transferfolien verwendet, die eine Trägerlage und eine Transferlage aufweisen. Die Transferlage wird auf das zu dekorierende Objekt übertragen, während die Trägerlage abgezogen und verworfen wird.

Ein häufig verwendetes Dekorelement in solchen Folien sind teilmetallisierte Schichten, in denen die Metallisierung ein optisches Design, eine elektrische Funktion oder dergleichen ausbildet. Zur Herstellung solcher teilmetallisierten Schichten sind verschiedene Verfahren bekannt.

Eine Herstellungsmöglichkeit liegt im Bedrucken einer Transferfolie mit einem wasserlöslichen Lack, insbesondere mit einem hohen Pigmentanteil für eine erhöhte Porosität, einem vollflächigen Bedampfen mit einer dünnen Metallschicht und anschließendem Abwaschen des wasserlöslichen Lackes, wobei das Metall überall dort auf der Folie verbleibt, wo kein wasserlöslicher Lack gedruckt war.

Alternativ ist es auch möglich, eine Transferfolie mit einer dünnen Metallschicht vollflächig zu bedampfen und mit einem Lack, der Resistenz gegen ein Ätzbad vermittelt, zu bedrucken. Die Strukturierung der Metallschicht erfolgt durch anschließendes chemisches Abätzen der Metallschicht in einem Ätzbad, wobei das Metall überall dort auf der Folie verbleibt, wo der Resistlack gedruckt ist.

Eine Teilmetallisierung kann auch mittels UV-Belichtung und Photoresist erfolgen. Dabei wird ein Photoresist vollflächig auf die Metallschicht aufgedruckt und unter Verwendung einer Maske belichtet. Die Maske kann dabei separat vorliegen oder Teil des Schichtaufbaus der Transferfolie sein. Je nach verwendetem Photoresist (Positivresist oder Negativresist) wird dann der Resist in den belichteten oder unbelichteten Bereichen entfernt und dient in den anderen Bereichen wie oben beschrieben als Ätzresist.

Diese Verfahren unterliegen diversen Einschränkungen. Sie sind prinzipiell nur "Offline" durchführbar, d.h. das Bedampfen sowie die anschließende Entfernung der Metallschicht müssen jeweils in einer gesonderten Maschine erfolgen und die unterschiedlichen Prozessschritte können beispielsweise nicht in eine Druckstraße integriert werden.

Wenn weitere, insbesondere eingefärbte Dekorschichten aufgebracht werden sollen, ist die Position der Metallschicht im Dekoraufbau meist vorgegeben, wenn nicht die Möglichkeit besteht, die weiteren Dekorschichten registergenau relativ zu der Teilmetallisierung lagegenau anzuordnen. Man spricht hier auch von "Einpassern" oder auch "Insetting". In der Praxis bedeutet dies im Hinblick auf die o.g. bekannten Teilmetallisierungsverfahren, dass eine Teilmetallisierung im Abwaschverfahren nach allen anderen zur Teilmetallisierung registerhaltigen Dekorschichten aufgebracht werden muss. Eine Kombination einer registerhaltigen Teilmetallisierung im Ätzverfahren mit weiteren Dekorlackschichten ist ohne das o.g. Insetting überhaupt nicht realisierbar. Wenn diese Möglichkeit gegeben ist, liegt die Teilmetallisierung aus praktischen Erwägungen meist vor allen anderen Dekorschichten.

Unter Registergenauigkeit ist eine Lagegenauigkeit zweier oder mehr Elemente und/oder Schichten zueinander zu verstehen. Dabei soll sich die Registergenauigkeit innerhalb einer vorgegebenen Toleranz (Registertoleranz) bewegen und dabei möglichst gering sein. Gleichzeitig ist die Registergenauigkeit von mehreren Elementen und/oder Schichten zueinander ein wichtiges Merkmal, um die Fälschungssicherheit zu erhöhen. Die lagegenaue Positionierung kann dabei insbesondere mittels optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein. Von einem "perfekten Register" spricht man, wenn die Registertoleranz nahe Null bzw. praktisch Null ist.

Ökonomisch sinnvolle Teilmetallisierungen im dekorativen Bereich mittels Ätzverfahren sind zudem nicht mit allen Metallen realisierbar. Beispielsweise ist Chrom für derartige Verfahren kaum geeignet.

Die oft gewünschte Kombination einer Teilmetallisierung mit einer semitransparenten oder transparenten Farbschicht über dem Metall, beispielsweise zur Erzeugung eines grünen teilmetallisierten Bereiches, ist mit den geschilderten Verfahren nicht trivial ohne eine prozesstechnisch bedingte Registertoleranz oder auch Farbüberstand der transparenten Farbe zu realisieren.

Auch die Kombination von Dekorschichten, die z.B. holographische Elemente enthalten, mit einer Teilmetallisierung ist mit den geschilderten Verfahren technisch nur sehr schwer umzusetzen.

Das Dokument WO 2007/048563 A2 betrifft ein Verfahren zum Transfer eines Mehrschichtkörpers auf ein Substrat, ein Verfahren zur Herstellung einer Transferfolie sowie eine mittels dieses Verfahrens hergestellte Transferfolie.

Aufgabe der vorliegenden Erfindung ist es, ein Verfahren und eine Vorrichtung bereitzustellen, die die vereinfachte und verbesserte Herstellung einer verbesserten Mehrschichtfolie ermöglichen.

Diese Aufgabe wird durch ein Verfahren nach Anspruch 1 gelöst.

Zur Durchführung eines solchen Verfahrens eignet sich eine Vorrichtung zum Herstellen einer Mehrschichtfolie, umfassend:

- - eine Vorratsrolle zum Bereitstellen einer Prägefolie;

- eine Druckvorrichtung zum Aufbringen einer radikalisch härtbaren Klebstoffs auf zumindest einen Teilbereich eines Grundkörpers;

- eine Walzenanordnung zum Anpressen der Prägefolie an den Grundkörper;

- eine in Förderrichtung der Folien stromabwärts von der Walzenanordnung angeordnete UV-Lichtquelle zum Aushärten des Klebstoffs durch UV-Bestrahlung;

- eine in Förderrichtung der Folien stromabwärts von der UV-Lichtquelle angeordnete Abzieheinheit zum Abziehen einer Trägerlage der Prägefolie.

Man erhält so eine Mehrschichtfolie mit einer Trägerlage und einer Transferlage, wobei die Transferlage eine Dekorlage umfasst, in der zumindest eine partielle Klebstoffschicht und eine weitere partielle Schicht vorgesehen ist, welche im Register zu der partiellen Klebstoffschicht angeordnet ist. Eine solche Mehrschichtfolie eignet sich insbesondere zur Verwendung als Heißprägefolie, Kaltprägefolie, Laminierfolie, In-Mold-Decoration-Folie, Tiefziehfolie oder dergleichen.

Das Verfahren nutzt mit anderen Worten eine Präge-Transferfolie zur Erzeugung eines beliebig geformten, digital vorgegebenen Bereichs auf einer weiteren Transferfolie, welche den Grundkörper als Substrat darstellt. Nur dort, wo der Klebstoff aufgebracht wird, verbleibt die Transferlage der Prägefolie auf dem Grundkörper.

Die Transferlage der Prägefolie kann dabei insbesondere eine metallisierte Schicht umfassen. Der erzeugte metallisierte Bereich kann an einer beliebigen Position (vertikal im Schichtaufbau und horizontal im Design) im Schichtaufbau der Mehrschichtfolie positioniert sein.

Der erzeugte metallische Bereich kann dabei eine geschlossene metallische Fläche sein, aber auch eine durch nicht mit Metall belegte Flächen unterbrochen sein. Diese Unterbrechungen oder Freiräume können dabei so klein sein wie es die Druckauflösung der aufgebrachten Klebstoffschicht erlaubt. Insbesondere kann der metallische Bereich auch ein Metallraster sein mit regelmäßig oder unregelmäßig sehr fein verteilten Rasterelementen, beispielsweise Punkten oder Linien. Damit ist beispielsweise eine Semitransparenz des metallischen Bereichs erreichbar.

Die Prägefolie lässt sich prinzipiell inline, also innerhalb einer Druckstraße, und passerhaltig mit anderen Dekorschichten aufbringen. Zur Herstellung einer Mehrschichtfolie ist maschinentechnisch eine Vorrichtung denkbar, die als ein mobiles Modul ausgebildet ist, die bzw. das nach Bedarf an einer beliebigen Position einer Mehrfarbdruckmaschine eingesetzt werden kann. Es ist auch möglich, mehrere solcher mobilen Module gleichzeitig an verschiedenen Positionen oder auch mehrere solcher mobilen Module an der gleichen Position benachbart zueinander an einer Mehrfarbdruckmaschine einzusetzen.

Die Transferlage der Prägefolie, insbesondere also eine Teilmetallisierung, kann an einer beliebigen Stelle im Dekoraufbau platziert werden. Es sind sogar mehrere unabhängige teilmetallisierte Bereiche in einer Mehrschichtfolie denkbar, die z.B. unterschiedlich eingefärbt sein können.

Alternativ oder zusätzlich ist es denkbar, dass eines oder mehrerer solcher mobilen Module offline, also bei oder während der Applikation der Mehrschichtfolie auf ein beliebiges Substrat, eingesetzt werden. Das heißt, dass auf eine zu applizierende Mehrschichtfolie, insbesondere unmittelbar vor ihrer Applikation, die Prägefolie aufgebracht wird. Damit lassen sich beispielsweise Merkmale oder Motive vor der Applikation der Mehrschichtfolie auf den Grundkörper aufbringen. Diese Merkmale oder Motive können individualisiert oder personalisiert sein oder auch einheitlich ausgebildet sein. So werden bei der Applikation der Mehrschichtfolie also Grundkörper und Prägefolie zusammengeführt und so kombiniert. Dies bietet den Vorteil, dass sich die zu applizierende Mehrschichtfolie in ihrem Aufbau und Design leicht an die Wünsche der Kunden anpassen lässt. Der Kunde muss nun nicht mehr für die unterschiedlichen Verwendungen jeweils eine spezielle, komplett gefertigte Mehrschichtfolie verwenden, was dazu führt, dass er eine Unmenge an fertigen Mehrschichtfolien zu lagern hat. Der Kunde kann anstelle dessen kurz vor der Applikation der Mehrschichtfolie auf ein Substrat auf die zu applizierende Folie bzw. auf den Grundkörper eine oder mehrere Prägefolien, entsprechend seinen Wünschen und Bedürfnissen aufbringen.

Das eine oder die mehreren mobilen Module können als separate Vorrichtung bzw. Vorrichtungen ausgebildet sein, die flexibel in der Verarbeitungsstrecke der Mehrschichtfolie, beispielsweise unmittelbar vor und/oder nach der Prägestation zur Applikation der Mehrschichtfolie auf ein Substrat angeordnet werden kann.

Das eine oder die mehreren mobilen Module können auch als zuschaltbare integrierte Module der Prägestation für die Mehrschichtfolie ausgebildet sein.

Das eine oder die mehreren mobilen Module können dabei die Prägefolie auf die Mehrschichtfolie bzw. auf den Grundkörper oder alternativ oder zusätzlich die Prägefolie auf das Substrat aufbringen. Das Aufbringen der Prägefolie auf das Substrat kann vor und/oder nach der Applikation der Mehrschichtfolie bzw. des Grundkörpers auf das Substrat erfolgen.

Der Grundkörper kann so ausgebildet sein, dass dieser auch ohne die aufgebrachte Prägefolie als funktionsfähige Transferfolie verwendet, d.h. auf ein Substrat appliziert werden könnte. Auf die frei liegende Transferlage des Grundkörpers kann vor der Applikation auf ein Substrat nun zusätzlich die Prägefolie aufgebracht werden, um die bereits vorhandenen Schichten des Grundkörpers entsprechend zu ergänzen.

Alternativ oder zusätzlich kann die Prägefolie auch nach der Applikation auf ein Substrat auf die frei liegende Oberseite des Grundkörpers , insbesondere auf die frei liegende Schutzschicht des Grundkörpers, aufgebracht werden, um die bereits vorhandenen Schichten des Grundkörpers entsprechend zu ergänzen. Grundsätzlich denkbar ist auch, dass mehrere Prägefolien aufgebracht werden. Die Prägefolien unterscheiden sich dabei bevorzugt in ihrem Design voneinander. Die Prägefolien können inline und/oder offline auf den Grundkörper bzw. die zu applizierende Mehrschichtfolie aufgebracht werden. Denkbar ist auch, dass die Prägefolien vor der Applikation auf ein Substrat und/oder nach der Applikation auf ein Substrat aufgebracht werden.

Der Grundkörper kann beispielsweise vollflächige oder partielle transparente und/oder transluzente Schichten und/oder opake Schichten, insbesondere in Motivform oder Musterform, aufweisen. Die Prägefolie kann diese Schichten ergänzen, indem insbesondere passergenau oder auch nicht passergenau zu den bereits vorhandenen Schichten beispielsweise Farbschichten und/oder Metallschichten aufgebracht werden.

Diese durch die Prägefolie ergänzten Schichten können auf dem Grundkörper bzw. auf der fertigen Mehrschichtfolie beispielsweise eine Individualisierung in Form einer Kodierung und/oder eines Motivs und/oder eines Musters darstellen oder auch lediglich eine flexibel einsetzbare Komponente des Dekors der Mehrschichtfolie darstellen. Das heißt, dass der Grundkörper beispielsweise einen Grundbestandteil eines Dekors in Motivform und/oder Musterform aufweisen kann, der durch einen flexiblen Bestandteil des Dekors in Motivform und/oder Musterform ergänzt bzw. vervollständigt wird. Alternativ dazu kann der Grundkörper noch kein Dekor aufweisen, wobei das Dekor erst durch die Schichten der Prägefolie aufgebracht wird. Der Grundkörper kann dabei beispielsweise lediglich eine oder mehrere Schutzschichten aufweisen, auf die die Schichten der Prägefolie aufgebracht werden.

Diese durch die Prägefolie ergänzten Schichten können auf der Mehrschichtfolie beispielsweise eine flexibel einsetzbare Funktionalität der Mehrschichtfolie darstellen. Das heißt, dass der Grundkörper einen Grundbestandteil einer Funktion, beispielsweise einer elektrischen oder elektronischen Funktion aufweist, der durch einen flexiblen Bestandteil der Funktionalität ergänzt bzw. vervollständigt wird. Alternativ dazu kann der Grundkörper noch keine Funktion aufweisen, wobei die Funktion erst durch die Schichten der Prägefolie erbracht wird. Beispiele hierfür sind Antennen, Touchfunktionselemente, Heizelemente, Bestandteile von Anzeigevorrichtungen bzw. Displays, Bestandteile von Beleuchtungselementen, Leiterbahnen und ähnliche elektrische Funktionselemente.

Bei Verwendung einer Prägefolie mit einer Metallschicht ist eine Teilmetallisierung mit allen Metallen möglich, mit denen eine vollflächig metallisierte Transferlage herstellbar ist.

Eine Teilmetallisierung kann so beliebig eingefärbt werden, ohne dass ein Überstand der transparenten Lackschicht sichtbar ist. Außerdem sind holographische Effekte integrierbar. Vorder- und Rückseite der Metallisierung können zudem unterschiedlich eingefärbt sein.

Das Verfahren ist flexibel, da Farbe und Erscheinungsbild der Metallisierung oder anderer, mit dieser kombinierten Dekorschichten, durch einfachen Wechsel der Prägefolie geändert werden können.

Es ist dabei bevorzugt, wenn ein Grundkörper und eine Prägefolie verwendet werden, die so ausgebildet sind, dass eine Ablösekraft zwischen der Trägerlage der Prägefolie und der Transferlage der Prägefolie geringer ist als eine Ablösekraft zwischen der Trägerlage des Grundkörpers und der Transferlage des Grundkörpers. Dies ermöglicht das Ablösen der Trägerlage der Prägefolie zusammen mit den nicht verklebten Bereichen der Transferlage der Prägefolie, ohne dass die übertragenen Schichten oder die Schichten des Grundkörpers beschädigt werden.

Es ist dabei vorteilhaft, wenn die Ablösekraft zwischen der Trägerlage der Prägefolie und der Transferlage der Prägefolie um wenigstens 15 % kleiner, bevorzugt um wenigstens 30 % kleiner ist als die Ablösekraft zwischen der Trägerlage des Grundkörpers und der Transferlage des Grundkörpers. Die Ablösekräfte wurden mithilfe einer Zugversuch-Prüfmaschine (Zwick Z005 der Firma Zwick GmbH & Co. KG, Ulm) ermittelt. Hierzu wurde die Prägefolie oder der Grundkörper flach auf die untere Halterung geklebt. Die abzulösende Schicht wurde dann im rechten Winkel durch den Zugversuch abgelöst. Über die Kraftmessdose wurden die Ablösekräfte ermittelt.

In einer weiteren bevorzugten Ausführungsform wird der Klebstoff durch Siebdruck oder Flexodruck aufgebracht. Es ist jedoch besonders bevorzugt, wenn der Klebstoff durch Tintenstrahldruck aufgebracht wird.

Die Struktur der übertragenen Bereiche der Transferlage der Prägefolie wird im bevorzugten Fall des Tintenstrahldrucks beim Aufbringen des Klebstoffs digital erzeugt, so dass die entsprechenden Effekte auf Einzelbildebene individualisierbar oder personalisierbar bzw. inline während des Druckprozesses beliebige Änderungen in der Form des metallisierten Bereichs möglich sind.

Bevorzugt wird zum Aufbringen des Klebstoffs ein Tintenstrahldruckkopf mit einer Auflösung von 300 bis 1200 Auftragsdüsen pro Zoll (npi, nozzles per inch) verwendet. Hierdurch wird ein hochauflösender Auftrag des Klebstoffs ermöglicht, so dass auch feine Folienstrukturen randscharf übertragen werden können. In der Regel entspricht die Auflösung des Druckkopfes dabei der erzielten Auflösung der Klebstofftropfen auf der Übertragungslage in dpi (dots per inch, Punkte pro Zoll).

Es ist ferner bevorzugt, wenn zum Aufbringen des Klebstoffs ein Tintenstrahldruckkopf mit einem Düsendurchmesser von 15 $\mu$m bis 25 $\mu$m mit einer Toleranz von nicht mehr als $\pm$ 5 $\mu$m und/oder einem Düsenabstand von 50 $\mu$m bis 150 $\mu$m mit einer Toleranz von nicht mehr als $\pm$ 5 $\mu$m verwendet wird. Durch den geringen Düsenabstand - insbesondere quer zur Druckrichtung - wird sichergestellt, dass die übertragenen Klebstofftropfen auf der Transferlage hinreichend nahe beieinander liegen bzw. ggf. auch überlappen, so dass über die gesamte bedruckte Fläche eine gute Haftung erzielt wird.

Es ist ferner bevorzugt, wenn der Klebstoff mit einem Flächengewicht von 0,5 g/m$^2$ bis 20 g/m$^2$ und/oder einer Schichtdicke von 0,5 $\mu$m bis 20 $\mu$m, bevorzugt von 1 $\mu$m bis 15 $\mu$m auf den zumindest einen Teilbereich aufgebracht wird. Innerhalb dieses Bereichs, der eine gute Haftung garantiert, kann die Auftragsmenge bzw. Schichtdicke des Klebstoffs in Abhängigkeit von dem verwendeten Grundkörper, insbesondere von dessen Saugfähigkeit, variiert werden, um das Applikationsergebnis weiter zu optimieren.

Dabei ist es zweckmäßig, wenn durch den Tintenstrahldruckkopf Klebstofftropfen mit einer Frequenz von 6 kHz bis 110 kHz bereitgestellt werden. Bei üblichen Fördergeschwindigkeiten der zu bedruckenden Folie von 10 m/min. bis 30 m/min. kann so in Förderrichtung die gewünschte Auflösung von 360 dpi bis 1200 dpi erzielt werden.

Bevorzugt werden durch den Tintenstrahldruckkopf Klebstofftropfen mit einem Volumen von 2 pl bis 50 pl mit einer Toleranz von nicht mehr als $\pm$ 6% bereitgestellt. Damit wird bei den beschriebenen Auftragsauflösungen und Auftragsgeschwindigkeiten die notwendige Klebstoffmenge gleichmäßig auf die Transferlage aufgebracht.

Dabei ist es bevorzugt, wenn durch den Tintenstrahldruckkopf Klebstofftropfen mit einer Fluggeschwindigkeit von 5 m/s bis 10 m/s mit einer Toleranz von nicht mehr als $\pm$ 15% bereitgestellt werden. Hierdurch wird die Ablenkung der Klebstofftropfen insbesondere durch Zugluft während des Transfers vom Druckkopf zur Transferlage minimiert, so dass die Klebstofftropfen in der gewünschten definierten Anordnung auf der Transferlage landen.

Weiter ist es zweckmäßig, wenn der Klebstoff mit einer Auftragstemperatur von 40°C bis 45°C und/oder einer Viskosität von 5 mPas bis 20 mPas, bevorzugt von 7 mPas bis 15 mPas auf die Transferlage aufgetragen wird. Die Temperaturkontrolle des Druckkopfes stellt dabei sicher, dass der Klebstoff die gewünschte Viskosität besitzt. Von der Viskosität hängt wiederum die Pixelgröße und Pixelform des auf die Übertragungslage aufgebrachten Klebstoffs ab, wobei bei den angegebenen Werten eine optimale Verdruckbarkeit des Klebstoffs gewährleistet ist.

Sobald der Klebstoff den Druckkopf verlässt und in Kontakt mit Umgebungsluft bzw. der Übertragungslage kommt, kommt es dabei zu einer Abkühlung, durch die die Viskosität des Klebstoffs erhöht wird. Dies wirkt einem Verlaufen oder Spreiten der übertragenen Klebstofftropfen entgegen.

Es ist weiter vorteilhaft, wenn ein Abstand zwischen Tintenstrahldruckkopf und Grundkörper beim Aufbringen des Klebstoffs 1 mm nicht überschreitet. Auch hierdurch wird die Beeinflussung des Klebstoffs durch Zugluft reduziert.

Vorzugsweise beträgt dabei eine Relativgeschwindigkeit zwischen Tintenstrahldruckkopf und Grundkörper beim Aufbringen des Klebstoffs 10 m/min bis 30 m/min.

Bei diesen Geschwindigkeiten wird insbesondere in Kombination mit den oben angegebenen Parametern die gewünschte Auflösung des auf die Transferlage gedruckten Klebstoffs erzielt.

Bevorzugt wird hierbei ein Klebstoff der folgenden Zusammensetzung verwendet (Prozentangaben bedeuten Volumen-Prozent):

| | |
|---|---|
| 2-Phenoxyethylacrylat | 10% bis 60%, bevorzugt 25% bis 50%; |
| 4-(1-Oxo-2-propenyl)-Morpholin | 5% bis 40%, bevorzugt 10% bis 25%; |
| Exo-1,7,7-trimethylbicyclo[2.2.1]-hept-2-ylacrylat | 10% bis 40 %, bevorzugt 20% bis 25%; |
| 2,4,6-Trimethylbenzoyldiphenylphosphinoxid | 5% bis 35%, bevorzugt 10% bis 25%; |
| Dipropylenglykoldiacrylat | 1% bis 20%, bevorzugt 3% bis 10%; |
| Urethanacrylat oligomer | 1% bis 20%, bevorzugt 1% bis 10%. |

Eine solche Formulierung garantiert die erwünschten Eigenschaften, insbesondere die rasche Aushärtung und eine Viskosität, welche eine gute Verdruckbarkeit bei gleichzeitig stabilem und scharfem Auftrag ermöglicht.

Dabei ist es zweckmäßig, wenn ein Klebstoff mit einer Dichte von 1 g/ml bis 1,5 g/ml, bevorzugt von 1,0 g/ml bis 1,1 g/ml verwendet wird.

Es ist insbesondere vorteilhaft, wenn der Klebstoff in Form einer optisch wahrnehmbaren Information, insbesondere in Form eines Individualisierungsmerkmals, aufgebracht wird.

Hierdurch können nahezu beliebige Designs verwirklicht werden, die zur Laufzeit des Verfahrens individuell angepasst werden können. So können beispielsweise Sicherheitselemente mit Seriennummern, Informationen zum zu sichernden Objekt, Inhaberinformationen oder dergleichen versehen werden.

Dabei ist es vorteilhaft, wenn der Klebstoff in einer vorgegebenen relativen Lagebeziehung, d.h. insbesondere im Register zu einer weiteren optisch wahrnehmbaren Information, die von der Transferlage des Grundkörpers ausgebildet wird, aufgebracht wird.

Die durch die übertragenen Bereiche der Transferlage der Prägefolie gebildeten Designs können so registergenau zu bereits in der Transferlage des Grundkörpers vorliegenden Designs aufgebracht werden. Dabei können entweder die Designs des Grundkörpers selbst zur Steuerung des registergenauen Klebstoffauftrags herangezogen werden, oder spezielle Registermarken oder Passermarken auf den Grundkörper aufgebracht werden. Es ist dabei zweckmäßig, wenn eine Position der weiteren optisch wahrnehmbare Information vor dem Aufbringen des Klebstoffs mittels einer Kamera, insbesondere einer Zeilenkamera, erfasst wird und der Klebstoffauftrag in Abhängigkeit von der erfassten Position gesteuert wird.

Hierdurch können auch leichte Lageverschiebungen der Designs im Grundkörper ausgeglichen werden, so dass sich immer ein registerhaltiger Auftrag ergibt.

Weiter ist es bevorzugt, wenn der Klebstoff vor dem Aufbringen der Prägefolie vorgehärtet wird.

Die Vorhärtung des Klebstoffs verbessert die Auftragsqualität weiter. Insbesondere wird hierdurch die Viskosität des Klebstoffs erhöht, bevor die Transferlage der Prägefolie in der Walzenanordnung auf den Grundkörper gepresst wird. Dies vermeidet ein Verlaufen oder zu starkes Verquetschen der aufgebrachten Klebstoffpixel bei der Übertragung, so dass eine besonders randscharfe Applikation der Transferlage der Prägefolie auf den Grundkörper und eine besonders hohe Oberflächenqualität der übertragenen Schichten erzielt wird. Dabei ist ein geringfügiges Verquetschen der Klebstoffpixel durchaus wünschenswert, um direkt benachbarte Klebstoffpixel einander anzunähern und zu vereinigen. Dies kann vorteilhaft sein, um beispielsweise bei geschlossenen Flächen und/oder an Motivrändern eine Pixeligkeit der Darstellung zu vermeiden, d.h. zu vermeiden, dass einzelne Pixel störend optisch in Erscheinung treten. Das Verquetschen darf dabei nur so weit erfolgen, dass die gewünschte Auflösung nicht zu stark verringert wird. Bevorzugt erfolgt das Vorhärten des Klebstoffs 0,02 s bis 0,025 s nach dem Aufbringen des Klebstoffs. Hierdurch wird der Klebstoff sehr schnell nach dem Druck durch die Vorhärtung auf der Transferlage des Grundkörpers fixiert, so dass ein Verlaufen oder Spreiten der Klebstofftropfen weitgehend vermieden wird und die hohe Druckauflösung möglichst gut erhalten bleibt.

Es ist dabei zweckmäßig, wenn das Vorhärten des Klebstoffs mit UV-Licht erfolgt, dessen Energie zu mindestens 90% im Wellenlängenbereich zwischen 380 nm und 420 nm abgestrahlt wird. Bei diesen Wellenlängen wird insbesondere bei den oben geschilderten Klebstoffformulierungen die radikalische Aushärtung zuverlässig in Gang gesetzt.

Es ist weiter vorteilhaft, wenn das Vorhärten des Klebstoffs mit einer Brutto-Bestrahlungsstärke von 2 W/cm$^2$ bis 5 W/cm$^2$ und/oder einer Netto-Bestrahlungsstärke von 0,7 W/cm$^2$ bis 2 W/cm$^2$ und/oder einem Energieeintrag in den Klebstoff von 8 mJ/cm$^2$ bis 112 mJ/cm$^2$ erfolgt. Hierdurch wird erreicht, dass der Klebstoff die gewünschte Viskositätserhöhung durchmacht, dabei allerdings nicht vollständig ausgehärtet wird, so dass beim Applizieren der Transferlage der Prägefolie auf den Grundkörper die notwendige Haftwirkung des Klebstoffs erhalten bleibt.

Bevorzugt erfolgt dabei das Vorhärten des Klebstoffs mit einer Belichtungszeit von 0,02 s bis 0,056 s. Bei den erwähnten Transportgeschwindigkeiten des Grundkörpers und den angegebenen Bestrahlungsstärken wird so der notwendige Energieeintrag für die Vorhärtung sichergestellt.

Dabei ist es zweckmäßig, wenn sich beim Vorhärten des Klebstoffs dessen Viskosität auf 50 mPas bis 200 mPas erhöht. Durch eine solche Viskositätserhöhung wird garantiert, dass die Klebstofftropfen beim Applizieren der Transferlage auf den Grundkörper nicht verquetscht werden, so dass die Transferlage der Prägefolie im Wesentlichen mit der beim Drucken des Klebstoffs erzielten Auflösung auf den Grundkörper übertragen werden kann.

Das Aufbringen der Transferlage der Prägefolie auf den mit Klebstoff versehenen Teilbereich des Grundkörpers erfolgt dabei bevorzugt zwischen einer Presswalze und einer Gegendruckwalze. Hierdurch wird eine über die ganze Breite des Grundkörpers konstante Linienpressung und damit eine gleichmäßige und hochqualitative Applikation der Transferlage erreicht.

Es ist dabei zweckmäßig, wenn das Aufbringen der Prägefolie auf den Grundkörper mit einem Anpressdruck von 10 N bis 80 N erfolgt. Innerhalb dieses Bereichs kann der Anpressdruck variiert werden, um das Verfahren an die Substratbeschaffenheit anzupassen und Beschädigungen oder Verformungen des Grundkörpers oder der Transferlage der Prägefolie zu verhindern.

Vorteilhafterweise erfolgt das Aufbringen der Prägefolie auf den Grundkörper 0,2 s bis 1,7 s nach dem Vorhärten des Klebstoffs. In diesem Zeitraum kann die Vorhärtereaktion voranschreiten, ohne dass eine übermäßige Härtung des Klebstoffs erfolgt, welche die Haftung beeinträchtigen könnte.

Das Aushärten des Klebstoffs 0,2 s bis 1,7 s erfolgt dabei bevorzugt nach dem Aufbringen der Transferlage der Prägefolie auf den Grundkörper. Bei den üblichen Transportgeschwindigkeiten der Folien wird so ein hinreichender räumlicher Abstand zwischen der Walzenanordnung und der Aushärtestation sichergestellt.

Es ist dabei zweckmäßig, wenn das Aushärten des Klebstoffs mit UV-Licht erfolgt, dessen Energie zu mindestens 90% im Wellenlängenbereich zwischen 380 nm und 420 nm abgestrahlt wird. Bei diesen Wellenlängen wird insbesondere bei den oben geschilderten Klebstoffformulierungen die radikalische Aushärtung zuverlässig in Gang gesetzt.

Ferner ist es bevorzugt, wenn das Aushärten des Klebstoffs mit einer Brutto-Bestrahlungsstärke von 12 W/cm$^2$ bis 20 W/cm$^2$ und/oder einer Netto-Bestrahlungsstärke von 4,8 W/cm$^2$ bis 8 W/cm$^2$ und/oder einem Energieeintrag in den Klebstoff von 200 mJ/cm$^2$ bis 900 mJ/cm$^2$, bevorzugt von 200 mJ/cm$^2$ bis 400 mJ/cm$^2$erfolgt. Bei einem derartigen Energieeintrag wird eine zuverlässige Durchhärtung des Klebstoffs erreicht, so dass nach dem Aushärteschritt die Trägerlage der Prägefolie abgezogen werden kann, ohne dass die applizierte Transferlage beschädigt wird.

Ferner ist es vorteilhaft, wenn das Aushärten des Klebstoffs mit einer Belichtungszeit von 0,04 s bis 0,112 s erfolgt. Bei den angegebenen Brutto-Bestrahlungsstärken und den üblichen Transportgeschwindigkeiten wird so der notwendige Nettoenergieeintrag für die Durchhärtung des Klebstoffs sichergestellt.

Es ist ferner bevorzugt, wenn das Ablösen der Trägerlage 0,2 s bis 1,7 s nach dem Aushärten des Klebstoffs erfolgt. Bei den üblichen Transportgeschwindigkeiten der Folien wird so ein hinreichender räumlicher Abstand zwischen der Aushärtestation und der Ablösestation sichergestellt. Bevorzugt wird ein Grundkörper und/oder eine Prägefolie verwendet, die eine Trägerlage aus Polyester, Polyolefin, Polyvinyl, Polyimid, ABS, PET, PC, PP, PE, PVC oder PS mit einer Schichtdicke von 3 μm bis 100 μm, bevorzugt von 7 μm bis 23 μm aufweist. Die Trägerlage schützt und stabilisiert die Transferlage während der Herstellung, Lagerung und Verarbeitung der Folien. Soll beim Vor- oder Durchhärten des Klebstoffs von Seite der Trägerlage aus mit UV-Licht belichtet werden, so ist die Materialauswahl nach der entsprechenden Transparenz der Trägerlage im Belichtungswellenlängenbereich zu richten.

Es ist weiter zweckmäßig, wenn ein Grundkörper und/oder eine Prägefolie verwendet wird, deren Trägerlage eine Ablöseschicht aus Acrylat-Copolymer, insbesondere aus einem wässrigen Polyurethan-Copolymer, und bevorzugt frei von Wachs und/oder frei von Silikon, mit einer Schichtdicke von 0,01 μm bis 2 μm, bevorzugt von 0,1 μm bis 0,5 μm aufweist, welche auf einer Oberfläche der Trägerlage angeordnet ist. Die Ablöseschicht ermöglicht ein einfaches und beschädigungsfreies Ablösen der Trägerlage von der Transferlage nach deren Applikation auf das Substrat.

Weiter ist es bevorzugt, wenn ein Grundkörper und/oder eine Prägefolie verwendet wird, deren Transferlage eine Lackschicht aus Nitrocellulose, Polyacrylat und Polyurethan-Copolymer mit einer Schichtdicke von 0,1 μm bis 5 μm, bevorzugt von 1 μm bis 2 μm aufweist. Die Lackschicht kann dabei transparent, transluzent oder transparent eingefärbt, oder opak eingefärbt sein.

Bevorzugt umfasst die Lackschicht zumindest einem Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel.

Es ist weiter bevorzugt, wenn ein Grundkörper und/oder eine Prägefolie verwendet wird, deren Transferlage zumindest eine Replizierschicht, insbesondere aus Polyacrylat, Polyesteracrylat, Polyurethane und deren Copolymere umfasst, in die ein Oberflächenrelief eingebracht ist, welches ein optisch variables Element, insbesondere ein Hologramm, Kinegram® oder Trustseal®, ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope, Mattstruktur, oder eine lichtbeugende und/oder lichtbrechende und/oder lichtfokussierende Mikro- oder Nanostruktur, eine binäre oder kontinuierliche Fresnelllinsen, eine binäre oder kontinuierliche Fresnel-Freiformfläche, eine Mikroprismenstruktur oder eine Kombinationsstruktur daraus ausbildet.

Hierdurch sind vielfältige ansprechende optische Effekte realisierbar, die besonders schwer nachzuahmen und zu manipulieren sind.

Ferner wird bevorzugt ein Grundkörper und/oder eine Prägefolie verwendet, deren Transferlage eine Metallschicht aus Aluminium und/oder Chrom und/oder Silber und/oder Gold und/oder Kupfer mit einer Schichtdicke von 10 nm bis 200 nm, bevorzugt von 10 nm bis 50 nm aufweist.

Alternativ oder zusätzlich zu der Metallschicht kann auch eine Schicht aus einem HRI-Material (HRI = High Refractive Index) vorgesehen sein. HRI-Materialien sind beispielsweise Metalloxide wie ZnS, TiO$_x$ oder auch Lacke mit entsprechenden Nanopartikeln.

Sowohl die Lackschicht als auch die Metallschicht erzeugen den gewünschten dekorativen Effekt der Transferlage nach deren Übertragung auf den Grundkörper. Durch die Kombination von verschiedenen Lackfarben und Metallen können dabei besonders ansprechende Designs verwirklicht werden.

Besonders vorteilhaft ist es, wenn ein Grundkörper und/oder eine Prägefolie verwendet wird, deren Übertragungslage eine Grundierungsschicht aus Polyacrylaten und/oder Vinylacetatcopolymeren mit einer Schichtdicke von 0,1 μm bis 1,5 μm, bevorzugt von 0,5 μm bis 0,8 μm aufweist. Die Grundierungsschicht kann dabei in ihren physikalischen und chemischen Eigenschaften bezüglich des verwendeten Klebstoffs optimiert werden, so dass weitestgehend unabhängig vom Substrat eine optimale Haftung zwischen Substrat und Transferlage gewährleistet ist. Ferner garantiert eine derart optimierte Grundierungsschicht, dass der aufgetragene Klebstoff in der gewünschten Auflösung weitgehend ohne Verlaufen, Spreiten oder Verquetschen auf der Transferlage verbleibt.

Dabei ist es insbesondere zweckmäßig, wenn die Grundierungsschicht mikroporös ist und insbesondere eine Oberflächenrauigkeit im Bereich von 100 nm bis 180 nm, insbesondere im Bereich von 120 nm bis 160 nm aufweist. Der Klebstoff kann in eine solche Schicht partiell eindringen und wird dadurch besonders gut in hoher Auflösung fixiert.

Besonders günstig hat sich erwiesen, dass eine Grundierungsschicht mit einer Pigmentierungszahl von 1,5 cm$^3$/g bis 120 cm$^3$/g zum Einsatz kommt, insbesondere der Bereich von 10 cm$^3$/g bis 20 cm$^3$/g.

Nachfolgend ist die Zusammensetzung einer Grundierungsschicht zur Berechnung angegeben (Angaben in Gramm):

| | |
|---|---|
| 4900 | organisches Lösungsmittel Äthylalkohol |
| 150 | organisches Lösemittel Toluol |
| 2400 | organisches Lösemittel Aceton |
| 600 | organisches Lösemittel Benzin 80/110 |
| 150 | Wasser |
| 120 | Bindemittel I: Ethyl Methacrylat Polymer |
| 250 | Bindemittel II: Vinylacetathomopolymer |
| 500 | Bindemittel III: Vinylacetat Vinyllaurat Copolymer, FK = 50 +/- 1% (FK = Festkörper) |
| 400 | Bindemittel IV: Iso-Butylmethacrylat |
| 20 | Pigment multifunktionales Siliziumoxid, mittlere Teilchengröße 3 $\mu$m |
| 5 | Füllstoff mikronisiertes Amidwachs, Teilchengröße 3 $\mu$m bis 8 $\mu$m |

Dabei gilt für die Pigmentierungszahl für diese Klebeschicht:

$$PZ = \sum_{1}^{x} \frac{(m_P \times f)_x}{(m_{BM} + m_A)} = \frac{20g \times 750}{1020g + 0g} = 14,7 \text{ cm}^3/\text{g}$$

Mit:

mp = 20 g multifunktionales Siliziumoxid
f = ÖZ/d = 300 / 0,4 g/cm$^3$ = 750 cm$^3$/g für multifunktionales Siliziumoxid (ÖZ = Ölzahl)
$m_{BM}$ = 120 g Bindemittel I + 250 g Bindemittel II + (0,5 x 500 g) Bindemittel III + 400 g Bindemittel IV = 1020 g
$m_A$ = 0 g

Auf diese Weise lassen sich ausgehend von einer für gut befundenen Zusammensetzung der Grundierungsschicht schnell und unkompliziert dazu abweichende weitere mögliche Pigmentierungen errechnen.

Weiterhin ist es zweckmäßig, wenn die Grundierungsschicht eine Oberflächenspannung von 38 mN/m bis 46 mN/m, bevorzugt von 41 mN/m bis 43 mN/m aufweist. Solche Oberflächenspannungen erlauben es, dass Klebstofftropfen, insbesondere von Klebstoffsystemen wie oben beschrieben, mit definierter Geometrie auf der Oberfläche haften ohne zu verlaufen.

Insgesamt lassen sich alle der genannten Schichten in den Aufbau der Transferlagen von Grundkörper und Prägefolie in beliebiger Kombination, Anzahl und Reihenfolge integrieren, so dass vielfältige Designs möglich sind. Alle Schichten können dabei partiell vorliegen und beispielsweise für sich oder in Kombination mit weiteren Schichten Motive und Designs ausbilden.

Vorteilhafterweise weist die Vorrichtung eine weitere Vorratsrolle zum Bereitstellen des Grundkörpers der Mehrschichtfolie auf. Die Druckvorrichtung zum Aufbringen eines radikalisch härtbaren Klebstoffs auf zumindest einen Teilbereich des Grundkörpers ist dabei bevorzugt in Förderrichtung des Grundkörpers stromabwärts von der weiteren Vorratsrolle angeordnet.

Die Vorrichtung weist bevorzugt wenigstens ein Mittel zum Führen des Grundkörpers auf. Die Führungsmittel sorgen insbesondere dafür, dass der Grundkörper der Druckeinrichtung und/oder der Walzenanordnung in der gewünschten Ausrichtung zugeführt wird. Die Führungsmittel können neben oder aber auch alternativ zu der weiteren Vorratsrolle angeordnet sein.

Es ist weiter bevorzugt, wenn eine erste Bilderfassungsvorrichtung zum Erfassen eines optischen Merkmals des Grundkörpers in Förderrichtung des Grundkörpers stromaufwärts von der Druckvorrichtung angeordnet ist und über eine Steuereinheit zum Steuern der Druckvorrichtung mit der Druckvorrichtung verbunden ist.

Wie bereits erläutert, kann so der Klebstoffauftrag exakt gesteuert werden, um eine registergenaue Anordnung der übertragenen Transferlage der Prägefolie zu bestehenden Designmerkmalen des Grundkörpers zu gewährleisten.

Ferner ist es bevorzugt, wenn die Walzenanordnung eine Presswalze und eine Gegendruckwalze umfasst, welche zur Einstellung eines Spaltmaßes der Walzenanordnung relativ zur Presswalze verstellbar ist.

Durch die Spaltmaßeinstellung kann kontrolliert werden, wie stark aufgetragene Klebstoffpunkte verquetscht werden und somit, welche Pixelgröße letztendlich resultiert.

Dabei ist es vorteilhaft, wenn eine zweite Bilderfassungsvorrichtung zum Erfassen eines optischen Merkmals der Mehrschichtfolie in Förderrichtung des Grundkörpers stromabwärts von der Abziehvorrichtung angeordnet ist und über eine Steuereinheit zum Steuern des Spaltmaßes mit der Walzenanordnung verbunden ist.

Die zweite Bilderfassungsvorrichtung ist bevorzugt ebenfalls eine Zeilenkamera. Sie dient der Qualitätskontrolle. Wird über die zweite Bilderfassungsvorrichtung festgestellt, dass die Klebstoffpixel zu sehr oder zu wenig verquetscht werden, kann das Spaltmaß justiert werden, so dass die gewünschte Auflösung wieder erreicht wird.

Ferner ist es vorteilhaft, wenn die Vorrichtung als Modul ausgelegt ist, welches in eine Druckstraße mit zumindest einem Druckwerk integrierbar ist.

Dies ermöglicht die Dekoration des Grundkörpers inline mit weiteren Druckschritten, die vor oder nach dem Auftrag der Transferlage der Prägefolie erfolgen können.

Die Erfindung wird nun anhand von Ausführungsbeispielen näher erläutert. Es zeigen

Fig. 1 Eine schematische Schnittdarstellung durch ein Ausführungsbeispiel einer Mehrschichtfolie;

Fig. 2 Eine schematische Schnittdarstellung durch eine Prägefolie zum Dekorieren eines Grundkörpers einer Mehrschichtfolie;

Fig. 3 Eine schematische Darstellung der Verfahrensschritte eines Ausführungsbeispiels eines Verfahrens zum Herstellen einer Mehrschichtfolie nach Fig. 1;

Fig. 4 Eine schematische Darstellung eines Ausführungsbeispiels einer Vorrichtung zum Herstellen einer Mehrschichtfolie nach Fig. 1;

Fig. 5 Eine schematische Darstellung der Abhängigkeit zwischen Spaltmaß der Prägewalzen und Pixelgröße des übertragenen Klebstoffs;

Fig. 6 Eine schematische Darstellung der Integration einer Vorrichtung nach Fig. 4 in eine Druckstraße.

Fig. 7 Eine schematische Darstellung der Integration einer Vorrichtung nach Fig. 4 während der Applikation der Mehrschichtfolie auf ein Substrat

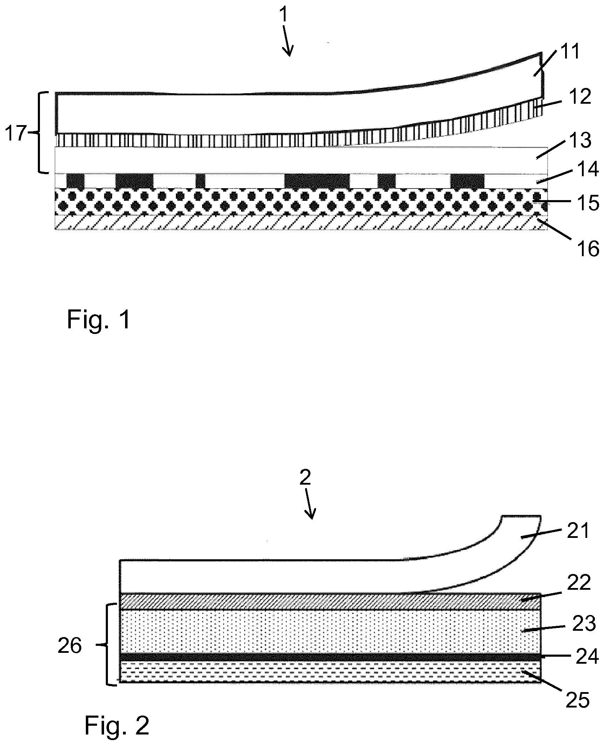

Fig. 1 zeigt eine Mehrschichtfolie 1, die zum Dekorieren von Objekten, zum Aufbringen von Sicherheitselementen und dergleichen verwendet werden kann.

Die Mehrschichtfolie 1 umfasst eine Trägerlage 11, eine Ablöseschicht 12, eine Schutzlackschicht 13, die selbst mehrschichtig sein kann, eine Dekorlage 14, die selbst mehrschichtig sein kann, eine weitere Lackschicht 15 und eine Grundierung 16, die selbst mehrschichtig sein kann und als Kleber beim Aufbringen der Mehrschichtfolie auf ein Substrat dient.

Die Trägerlage 11 besteht bevorzugt aus Polyester, Polyolefin, Polyvinyl, Polyimid, ABS, PET, PC, PP, PE, PVC oder PS mit einer Schichtdicke von 3 $\mu$m bis 100 $\mu$m. Die Trägerlage 11 schützt und stabilisiert die weiteren Lagen der Mehrschichtfolie 1 während der Herstellung, Lagerung und Verarbeitung der Folie.

Die Ablöseschicht 12 ist vorzugsweise aus Acrylat-Copolymer, insbesondere aus einem wässrigen Polyurethan-Copolymer, und bevorzugt frei von Wachs und/oder frei von Silikon, mit einer Schichtdicke von 0,01 $\mu$m bis 2 $\mu$m, bevorzugt von 0,1 $\mu$m bis 0,5 $\mu$m ausgebildet, und auf einer Oberfläche der Trägerlage 11 angeordnet.

Die Ablöseschicht 12 ermöglicht ein einfaches und beschädigungsfreies Ablösen der Trägerlage 11 von den weiteren Schichten der Mehrschichtfolie 1 nach deren Applikation auf das Substrat.

Die Schutzlackschicht 13 besteht bevorzugt aus Nitrocellulose, Polyacrylat und Polyurethan-Copolymer mit einer Schichtdicke von 0,1 $\mu$m bis 5 $\mu$m, bevorzugt von 1 $\mu$m bis 2 $\mu$m, und ist auf einer der Trägerlage 11 abgewandten Oberfläche der Ablöseschicht 12 angeordnet. Insbesondere können dabei mehrere Schichten aus diesen Stoffklassen eingesetzt werden.

Die Dekorlage 14 kann mehrschichtig aufgebaut sein. Unter Anderem kann die Dekorlage 14 Metallschichten, Schichten aus hochbrechenden Materialien (HRI, high refractive index), Lackschichten und Replizierschichten in beliebiger Reihenfolge und Kombination umfassen.

Dabei ist es bevorzugt, wenn eine solche Lackschicht aus Nitrocellulose, Polyacrylat und Polyurethan-Copolymer mit einer Schichtdicke von 0,1 $\mu$m bis 5 $\mu$m, bevorzugt von 1 $\mu$m bis 2 $\mu$m aufweist. Die Lackschicht kann dabei transparent, transluzent oder transparent eingefärbt, oder opak eingefärbt sein.

Bevorzugt umfasst die Lackschicht zumindest einem Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel.

Gegebenenfalls vorhandene Replizierschichten bestehen insbesondere aus Polyacrylat, Polyesteracrylat, Polyurethane und deren Copolymere, in die ein Oberflächenrelief eingebracht ist, welches ein optisch variables Element, insbesondere ein Hologramm, Kinegram® oder Trustseal®, ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope, Mattstruktur, oder eine lichtbeugende und/oder lichtbrechende und/oder lichtfokussierende Mikro- oder Nanostruktur, eine binäre oder kontinuierliche Fresnelllinsen, eine binäre oder kontinuierliche Fresnel-Freiformfläche, eine Mikroprismenstruktur oder eine Kombinationsstruktur daraus ausbildet.

Hierdurch sind vielfältige ansprechende optische Effekte realisierbar, die besonders schwer nachzuahmen und zu manipulieren sind.

Metallschichten werden in der Regel durch Aufdampfen erzeugt und bestehen bevorzugt aus Aluminium und/oder Chrom und/oder Silber und/oder Gold und/oder Kupfer mit einer Schichtdicke von 10 nm bis 200 nm, bevorzugt von 10 nm bis 50 nm. Alternativ kann die Metallschicht auch aus einem Lack mit metallischen Pigmenten und/oder anderen metallischen Partikeln wie z.B. Flakes mittels Druckverfahren aufgebracht werden, insbesondere mit einer Schichtdicke von 10 nm bis 2000 nm.

Alternativ oder zusätzlich zu der Metallschicht kann auch eine Schicht aus einem HRI-Material (HRI = High Refractive Index) vorgesehen sein. HRI-Materialien sind beispielsweise Metalloxide wie ZnS, $TiO_x$ oder auch Lacke mit entsprechenden Nanopartikeln.

Sowohl die Lackschicht als auch die Metallschicht erzeugen den gewünschten dekorativen Effekt der Dekorschicht 14. Durch die Kombination von verschiedenen Lackfarben und Metallen können dabei besonders ansprechende Designs verwirklicht werden.

Die weitere Lackschicht 15 ist optional und entspricht im Aufbau der Lackschicht 13.

Die Grundierungsschicht 16 besteht vorzugsweise aus Polyacrylaten und/oder Vinylacetatcopolymeren mit einer Schichtdicke von 0,1 $\mu$m bis 1,5 $\mu$m, bevorzugt von 0,5 $\mu$m bis 0,8 $\mu$m aufweist. Generell können jedoch beliebige Heiß-, Kalt- oder Reaktivklebstoffe eingesetzt werden, die in Abhängigkeit vom zu dekorierenden Substrat gewählt werden können. Insbesondere können dabei mehrere Schichten aus diesen Stoffklassen eingesetzt werden.

Bei der Herstellung der Mehrschichtfolie 1 werden zunächst die Ablöseschicht 12 und der Schutzlack 13 auf die Trägerlage 11 aufgebracht. Gegebenenfalls werden auch noch eine oder mehrere Schichten der Dekorlage 14 aufgebracht. Anschließend wird zumindest eine Schicht der Dekorlage 14, bevorzugt eine partielle Metallschicht, durch Prägen einer Kaltprägefolie 2 aufgetragen und anschließend die im Schichtaufbau folgenden Schichten erzeugt, beispielsweise durch Drucken.

Ein Ausführungsbeispiel einer hierfür verwendbaren Kaltprägefolie 2 ist in Fig. 2 gezeigt. Sie umfasst eine Trägerlage 21, eine Ablöseschicht 22, eine Schutzlackschicht 23, eine vollflächige Metallschicht 24 und eine Grundierungsschicht 25.

Die Trägerlage 21, Ablöseschicht 22, Schutzlackschicht 23 und Grundierungsschicht 25 entsprechen dabei in ihrer Zusammensetzung der Trägerlage 11, Ablöseschicht 12, Schutzlackschicht 13 und Grundierungsschicht 16 der Mehrschichtfolie 1. Es ist dabei jedoch zu beachten, dass die Ablösekraft der Ablöseschicht 12 größer sein muss, als die Ablösekraft der Ablöseschicht 22.

Die Metallschicht 24 wird durch vollflächiges Aufdampfen oder Sputtern erzeugt und besteht bevorzugt aus Aluminium und/oder Chrom und/oder Silber und/oder Gold und/oder Kupfer mit einer Schichtdicke von 10 nm bis 200 nm, bevorzugt von 10 nm bis 50 nm. Alternativ kann die Metallschicht auch aus einem Lack mit metallischen Pigmenten und/oder anderen metallischen Partikeln wie z.B. Flakes mittels Druckverfahren aufgebracht werden, insbesondere mit einer Schichtdicke von 10 nm bis 2000 nm.

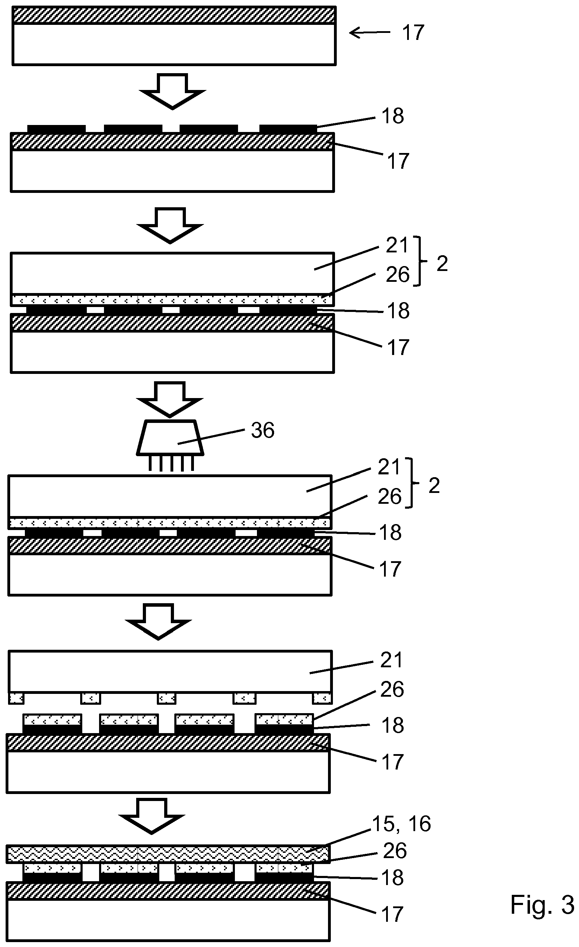

Bei der Herstellung der Mehrschichtfolie 1, die in Fig. 3 schrittweise dargestellt ist, wird zunächst ein Grundkörper 17 bereitgestellt, der zumindest die Trägerlage 11, Ablöseschicht 12 und Schutzlackschicht 13 umfasst. Auch eine oder mehrere Schichten der Dekorlage 14 können in den Grundkörper 17 integriert werden.

Anschließend wird auf eine der Trägerlage 11 abgewandte Oberfläche des Grundkörpers 17 eine Kleberschicht 18 partiell aufgebracht. Diese bildet bevorzugt ein Motiv oder Design, in dem die aus Schutzlack 23, Metallschicht 24 und Grundierung 25 bestehende Transferlage 26 der Prägefolie 2 aufgebracht werden soll.

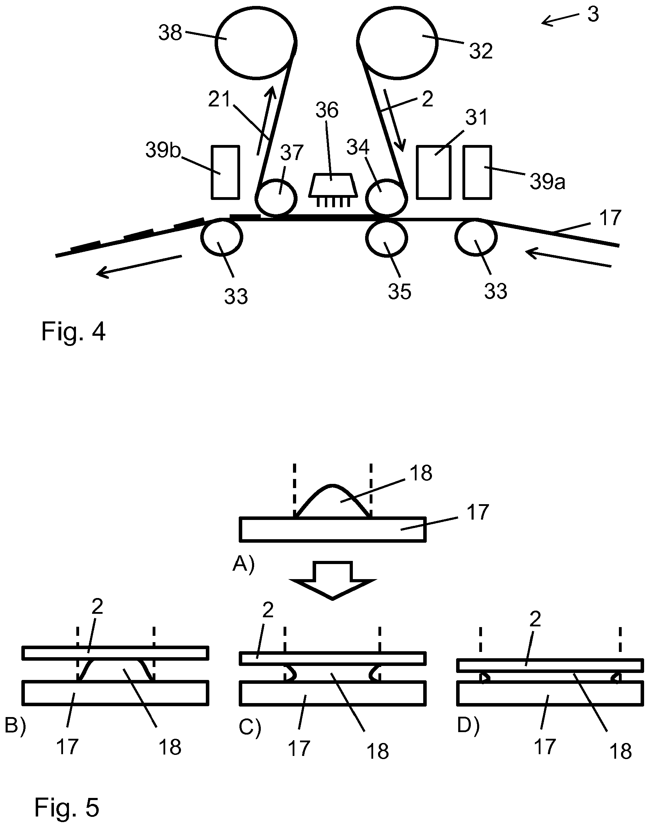

Der Auftrag der Kleberschicht erfolgt dabei in einer Vorrichtung 3 gemäß Fig. 4 mittels eines Tintenstrahldruckkopfs 31.

Der Tintenstrahldruckkopf 31 ist bevorzugt als Piezo-Drop-on-Demand-Druckkopf ausgebildet. Der Druckkopf 31 muss für hochqualitative Ergebnisse über eine bestimmte physikalische Auflösung, Tropfengröße und Düsenabstand verfügen.

Die Düsen können dabei in einer oder mehreren Reihen angeordnet sein. Die physikalische Auflösung sollte 300 npi bis 1200 npi (Nozzles per Inch, Düsen pro Zoll) betragen. Ein geringer Düsenabstand quer zur Druckrichtung sorgt dafür, dass die gedruckten Pixel ebenfalls quer zur Druckrichtung nah beieinander liegen oder je nach Klebstoffmenge überlappen. In der Regel entsprechen die npi den dpi (dots per inch, Punkte pro Zoll) auf der bedruckten Folie.

Der Düsenabstand sollte bevorzugt 50 $\mu$m bis 150 $\mu$m betragen, bei einem bevorzugten Düsendurchmesser von 15 $\mu$m bis 25 $\mu$m mit jeweils einer Toleranz von $\pm$ 5 $\mu$m, damit konstante Ergebnisse erzeugt werden.

Bei Einsatz der Graustufentechnik, können mehrere Graustufen auf demselben Pixel erzeugt werden. Die Graustufen werden in der Regel durch Abfeuern mehrerer gleichgroßer Tropfen auf einen gedruckten Pixel erzeugt. Analog zu den Graustufen beim Verdrucken von Druckfarben verhält sich die Klebstoffmenge auf dem Grundkörper 17.

Die Klebstoffmenge muss dabei je nach Saugfähigkeit der Oberfläche des Grundkörpers 17 variiert werden. Die Klebstoffmenge auf der Folie sollte bevorzugt 1,2 g/m$^2$ bis 12,6 g/m$^2$ betragen, um eine vollständige Folienapplikation auf jedem Substrat 4 zu gewährleisten. Die Schichtdicken des aufgetragenen Klebstoffs betragen dann 1,205 $\mu$m bis 12,655 $\mu$m.

Für eine optimale Benetzung des Grundkörpers 17 mit Klebstoff 18 sollte dessen Oberfläche eine Oberflächenspannung von 38 mN/m bis 46 mN/m aufweisen, insbesondere der Bereich von 41 mN/m bis 43 mN/m sorgt für eine optimale Farbannahme.

Um eine hohe Auflösung in Druckrichtung zu gewährleisten, muss der Piezo-Aktuator des Tintenstrahldruckkopfes 31 die Klebstofftropfen mit einer Frequenz von 6 kHz bis 110 kHz abfeuern, was für Bedruckstoffgeschwindigkeiten (also Fördergeschwindigkeiten des Grundkörpers 17) von 10 m/min bis 30 m/min eine Auflösung auf der Folie 2 von 360 dpi bis 1200 dpi erzeugt.

Der Druck innerhalb der Düsenkammer des Tintenstrahldruckkopfes 31 beträgt zum Zeitpunkt der Tropfenabgabe bevorzugt 1 bar bis 1,5 bar und darf nicht überschritten werden, um den Piezo-Aktuator nicht zu beschädigen. In der restlichen Zeit herrscht an den Düsenöffnungen ein leichter Unterdruck von etwa -5 bis -25 mbar, um ein ungewolltes Austreten von Tinte zu verhindern.

Der Abstand der Düsenplatte des Tintenstrahldruckkopfs 31 zum Grundkörper 17 darf 1 mm nicht überschreiten, um die Ablenkung der feinen Klebstofftropfen durch Zugluft zu minimieren.

Das Tropfenvolumen sollte bevorzugt 2 pl bis 50 pl betragen, die Toleranz beträgt $\pm$ 6 % des Tropfenvolumens. Damit werden bei einer gegebenen Auflösung die nötige und eine gleichmäßige Klebstoffmenge auf den Grundkörper 17 erreicht.

Die Tropfengeschwindigkeit sollte im Flug bevorzugt 5 m/s bis 10 m/s $\pm$15 % betragen, damit alle Klebstofftropfen auf dem Grundkörper 17 sehr genau nebeneinander landen. Weicht die Tropfengeschwindigkeit der einzelnen Tropfen voneinander zu stark ab, wird dies durch ein unruhiges Druckbild sichtbar.

Die resultierende Pixelgröße ist von der Viskosität des Klebstoffs abhängig. Für eine optimale Verdruckbarkeit des Klebstoffs, sollte dessen Viskosität vorzugsweise 5 mPas bis 20 mPas betragen, besonders bevorzugt 10 mPas bis 15 mPas.

Um eine gleichbleibende Viskosität des Klebstoffs zu gewährleisten, muss der Tintenstrahldruckkopf 31 oder das Klebstoffversorgungssystem beheizt sein. Für die genannte Viskosität muss die Klebstofftemperatur im Betrieb 40 °C bis 45 °C betragen.

Durch den Tropfenflug und das Auftreffen auf den Grundkörper 17 erhöht sich durch Abkühlen die Viskosität der Klebstofftropfen, vermutlich auf 20 mPas bis 50 mPas. Eine solche Erhöhung der Viskosität wirkt einem Verlaufen oder Spreiten des Klebstoffs auf dem Grundkörper 17 entgegen.

Anschließend wird die Prägefolie 2 von einer Vorratsrolle 32 bereitgestellt. Grundkörper 17 und Prägefolie 2 werden durch Umlenkrollen 33 so geführt, dass sie parallel zueinander laufen, wobei die jeweiligen, den Trägerlagen 11, 21 abgewandten Oberflächen einander zugewandt sind. Mittels einer Prägewalze 34 und einer Gegendruckwalze 35 wird die Prägefolie 2 nun an den Grundkörper 17 angepresst.

Die Prägewalze 34 sollte aus einem festen Kunststoff oder Gummi mit glatter Oberfläche bestehen und bevorzugt eine Härte von 70° Shore-A bis 90° Shore A aufweisen.

Die Gegendruckwalze 35 ist bevorzugt aus einem Material ausgebildet, das einen Härtegrad im Bereich von 60° Shore A bis 95° Shore A, vorzugsweise im Bereich von 80° Shore A bis 95° Shore A und/oder einen Härtegrad im Bereich von 450 HV 10 (HV = Vickershärte) bis 520 HV 10, vorzugsweise im Bereich von 465 HV 10 bis 500 HV 10 aufweist. Beispielsweise ist dieses Material Kunststoff oder Silikon oder aber ein Metall wie Aluminium oder Stahl. Der Radius der Prägewalze 34 und der Gegendruckwalze 35 sollte 1 cm bis 3 cm betragen.

Die durch die Prägewalze 34 ausgeübte Linienpressung sollte bevorzugt mit einer Kraft zwischen 10 N bis 80 N erfolgen, was je nach Substratbeschaffenheit angepasst werden kann.

Zur Anpassung des Anpressdrucks können Prägewalze 34 und Gegendruckwalze 35 gegeneinander verschoben werden, so dass das Spaltmaß zwischen den Walzen einstellbar ist.

Anschießend wird der Klebstoff 18 durch Bestrahlung mit einer UV-Lichtquelle 36 durchgehärtet.

Die Lichtquelle 366 ist bevorzugt als starke LED-UV-Lampe ausgebildet, die eine hohe Bestrahlungsleistung liefert und für eine vollständige radikalische Kettenreaktion innerhalb des Klebstoffs sorgt.

Der Abstand der UV-Lichtquelle 36 zu den Folien beträgt 1 mm bis 2 mm, um eine optimale Durchhärtung zu erreichen, gleichzeitig aber physikalischen Kontakt der UV-Lichtquelle 36 zur Prägefolie 2 zu vermeiden. Das Bestrahlungsfenster der UV-Lichtquelle 36 sollte in Maschinenrichtung 20 mm bis 40 mm groß sein.

Die Brutto-UV-Bestrahlungsstärke sollte bevorzugt zwischen 12 W/cm$^2$ bis 20 W/cm$^2$ liegen, damit der Klebstoff bei Geschwindigkeiten 10 m/min bis 30 m/min (oder höher) vollständig durchgehärtet wird.

Beachtet man diese Faktoren, wird der Klebstoff bei diesem Verfahren mit einer Netto-UV-Bestrahlungsstärke von vorzugsweise ca. 4,8 W/cm$^2$ bis 8,0 W/cm$^2$ bestrahlt. Dies entspricht einem Netto-Energieeintrag (Dosis) bei einer bevorzugten Bestrahlungszeit zwischen 0,112 s (bei 10 m/min Bahngeschwindigkeit und einem 20 mm Bestrahlungsfenster) und 0,040 s (30 m/min; 20 mm) in den Klebstoff von ca. 537 mJ/cm$^2$ bis 896 mJ/cm$^2$, was je nach benötigter Durchhärtung variiert werden kann.

Zu beachten ist, dass diese Werte nur theoretisch möglich sind (bei 100 % Lampenleistung). Bei voller Leistung der zweiten UV-Lichtquelle 17, z.B. bei der 20 W/cm$^2$-Version, und einer geringen Bahngeschwindigkeit, z.B. 10 m/min, erhitzt sich die Folienbahn so stark, dass sie Feuer fangen kann. Deshalb liegt der Netto-Energieeintrag vorzugsweise je nach Bahngeschwindigkeit zwischen 200 mJ/cm$^2$ und 400 mJ/cm$^2$.

Nach der Durchhärtung haftet die Prägefolie 2 vollständig auf dem Klebstoff 18 und der Klebstoff 18 vollständig auf dem Grundkörper 17. Die Trägerlage 21 der Prägefolie kann nun über eine Abziehrolle 37 abgezogen und auf einer Spule 38 aufgewickelt werden. Die Transferlage 26 der Prägefolie 2 mit der Metallschicht 24 verbleibt nun lediglich in den mit Klebstoff bedeckten Bereichen auf dem Grundkörper 17, so dass sich das gewünschte Design ergibt.

Die Vorrichtung 3 weist ferner noch zwei Zeilenkameras 39a, 39b auf. Die Kamera 39a ist am Einlauf der Vorrichtung positioniert und erfasst optische Merkmale des Grundkörpers 17, wie beispielsweise bestehende Designelemente oder Passermarken. Anhand dieser Erfassung wird der Druckkopf 31 angesteuert, so dass das Klebstoffmuster passergenau zu diesen Merkmalen aufgebracht wird.

Die Kamera 39b befindet sich am Auslauf der Vorrichtung 3 und erfasst die Qualität des Auftrags der Prägefolie 2. Von besonderer Bedeutung ist dabei das Spaltmaß zwischen den Walzen 34, 35 und damit der Anpressdruck. Wie in Fig. 5 veranschaulicht, wird ein Klebstofftropfen mit einem gegebenen Durchmesser aufgetragen (Fig. 5A). Ist das Spaltmaß zu groß, wird der Klebstofftropfen nicht hinreichend verquetscht und das resultierende Pixel ist zu klein (Fig. 5B). Bei zu kleinem Spaltmaß verquetscht der Klebstofftropfen zu sehr, so dass zu große Pixel resultieren (Fig. 5D). Lediglich bei korrektem Spaltmaß wird die gewünschte Pixelgröße erreicht (Fig. 5C).

Durch die Kamera 39b kann die resultierende Pixelgröße gemessen werden und bei Abweichungen vom Sollmaß das Spaltmaß durch Verstellen der Walzen 34, 35 justiert werden, so dass immer eine gleich bleibend gute Druckqualität erzielt wird.

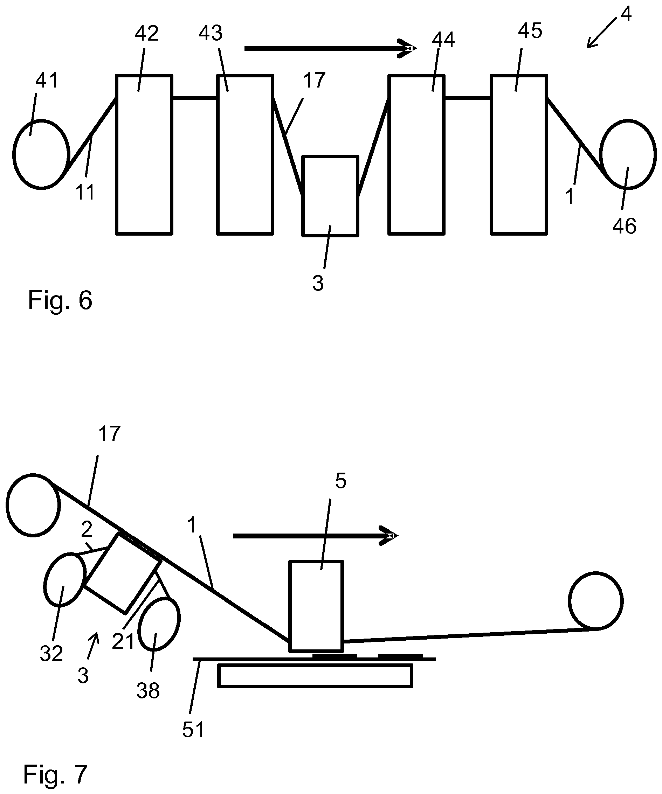

Wie Fig. 6 zeigt, kann die Vorrichtung 3 in eine Druckstraße 4 integriert werden, so dass der Auftrag der Prägefolie 2 auf den Grundkörper 17 inline mit weiteren Druckvorgängen durchgeführt werden kann. Von einer ersten Spule 41 wird dabei die Trägerlage 11 des Grundkörpers 17 bereitgestellt und in ersten Druckwerken 42, 43 mit den Beschichtungen versehen, die den Grundkörper 17 aufbauen.

Anschließend erfolgt in der Vorrichtung 3 wie beschrieben der Auftrag der Prägefolie 2, so dass die Dekorschicht 14 der Mehrschichtfolie 1 zumindest teilweise aufgebaut wird. Weitere Schichten können in den stromabwärts gelegenen Druckwerken 44, 45 auf den beprägten Grundkörper 17 aufgetragen werden, um so die fertige Mehrschichtfolie 1 zu erhalten, die anschließend auf einer weiteren Spule 46 aufgespult wird.

Wie Fig. 7 zeigt, kann die Vorrichtung 3 kurz vor bzw. bei der Applikation der Mehrschichtfolie 1 auf ein Substrat 51 angeordnet sein. Der Grundkörper 17 wird dabei bevorzugt von einer Spule bereitgestellt. Denkbar ist aber auch, dass von der Spule lediglich die Trägerlage des Grundkörpers bereitgestellt wird und zwischen der Spule und der Vorrichtung 3 noch Druckwerke angeordnet sind, die die Trägerlage des Grundkörpers mit weiteren Schichten, wie beispielsweise Dekorschichten und/oder Schutzschichten, versehen.

Anschließend erfolgt in der Vorrichtung 3 - wie bereits beschrieben - der Auftrag der Prägefolie 2 auf den Grundkörper 17. Nachdem die Mehrschichtfolie 1 hergestellt worden ist, wird die Mehrschichtfolie 1 einer Applikationsvorrichtung bzw. Prägevorrichtung 5 zugeführt. In der Applikationsvorrichtung 5 wird die Mehrschichtfolie 1 wenigstens bereichsweise auf ein Substrat 51 aufgebracht.

Vorteilhafterweise ist zwischen der Vorrichtung 3 und der Applikationsvorrichtung 5 wenigstens noch eine weitere Vorrichtung zum Auftragen einer weiteren Prägefolie 2 angeordnet. Hierdurch lässt sich die Mehrschichtfolie 1 individuell an die Bedürfnisse der Kunden anpassen. Denkbar ist auch, dass eine Vorrichtung 3, insbesondere eine weitere Vorrichtung 3, stromabwärts von der Applikationsvorrichtung 5 angeordnet ist.

Bezugszeichenliste

| 1  | Mehrschichtfolie |
|----|------------------|
| 11 | Trägerlage |
| 12 | Ablöseschicht |
| 13 | Schutzlackschicht |
| 14 | Dekorlage |
| 15 | Lackschicht |
| 16 | Grundierung |

| 17 | Grundkörper |
| 18 | Klebstoff |
| 2 | Kaltprägefolie |
| 21 | Trägerlage |
| 22 | Ablöseschicht |
| 23 | Schutzlackschicht |
| 24 | Metallschicht |
| 25 | Grundierungsschicht |
| 26 | Transferlage |
| 3 | Vorrichtung |
| 31 | Tintenstrahldruckkopf |
| 32 | Vorratsrolle |
| 33 | Umlenkrolle |
| 34 | Prägewalze |
| 35 | Gegendruckwalze |
| 36 | UV-Lichtquelle |
| 37 | Abziehrolle |
| 38 | Spule |
| 39a,b | Zeilenkamera |
| 4 | Druckstraße |
| 41 | erste Spule |
| 42, 43 | erste Druckwerke |
| 44, 45 | stromabwärts gelegene Druckwerke |
| 46 | weitere Spule |
| 5 | Applikationsvorrichtung |
| 51 | Substrat |

**Patentansprüche**

1. Verfahren zum Herstellen einer Mehrschichtfolie (1), mit den Schritten:

   a) Bereitstellen eines Grundkörpers (17) mit einer Trägerlage (11) und einer Transferlage, welche zumindest eine Schicht umfasst;
   b) Aufbringen eines insbesondere UV-härtbaren Klebstoffs (18) auf zumindest einen ersten Teilbereich der Transferlage des Grundkörpers (17), wobei in zumindest einem zweiten Teilbereich der Transferlage kein Klebstoff (18) aufgebracht wird;
   c) Aufbringen einer Prägefolie (2), welche eine Trägerlage (21) und eine Transferlage umfasst, so dass die Transferlage der Prägefolie (21) in dem zumindest einen ersten Teilbereich in Kontakt mit dem auf die Transferlage des Grundkörpers (17) aufgetragenen Klebstoff (18) kommt;
   d) Aushärten des Klebstoffs (18) durch UV-Bestrahlung;
   e) Abziehen der Trägerlage (21) der Prägefolie (2), wobei nur dort, wo der Klebstoff (18) aufgebracht wird, die Transferlage der Prägefolie auf dem Grundkörper (17) verbleibt.

2. Verfahren nach Anspruch 1,
   **dadurch gekennzeichnet,**
   **dass** ein Grundkörper (17) und eine Prägefolie (2) verwendet werden, die so ausgebildet sind, dass eine Ablösekraft zwischen der Trägerlage (21) der Prägefolie (2) und der Transferlage der Prägefolie (2) geringer ist als eine Ablösekraft zwischen der Trägerlage (11) des Grundkörpers (17) und der Transferlage des Grundkörpers (17), insbesondere ist die Ablösekraft der Trägerlage (21) der Prägefolie (2) und der Transferlage der Prägefolie (2) um wenigstens 15% kleiner als zwischen der Trägerlage (11) des Grundkörpers (17) und der Transferlage des Grundkörpers (17).

3. Verfahren nach Anspruch 1 oder 2,
   **dadurch gekennzeichnet,**
   **dass** der Klebstoff (18) durch Tintenstrahldruck aufgebracht wird.

4. Verfahren nach Anspruch 3,

**dadurch gekennzeichnet,**

**dass** zum Aufbringen des Klebstoffs (18) ein Tintenstrahldruckkopf mit einer Auflösung von 300 bis 1200 Auftragsdüsen pro Zoll (npi, nozzles per inch) verwendet wird, und/oder

**dass** zum Aufbringen des Klebstoffs (18) ein Tintenstrahldruckkopf (31) mit einem Düsendurchmesser von 15 $\mu$m bis 25 $\mu$m mit einer Toleranz von nicht mehr als $\pm$ 5 $\mu$m und/oder einem Düsenabstand von 50 $\mu$m bis 150 $\mu$m mit einer Toleranz von nicht mehr als $\pm$ 5 $\mu$m verwendet wird, und/oder

**dass** der Klebstoff (18) mit einem Flächengewicht von 0,5 g/m$^2$ bis 20 g/m$^2$ und/oder einer Schichtdicke von 0,5 $\mu$m bis 20 $\mu$m, bevorzugt von 1 $\mu$m bis 15 $\mu$m, auf den zumindest einen Teilbereich aufgebracht wird, und/oder

**dass** durch den Tintenstrahldruckkopf (31) Klebstofftropfen mit einer Frequenz von 6 kHz bis 110 kHz bereitgestellt werden, und/oder dass durch den Tintenstrahldruckkopf (31) Klebstofftropfen mit einem Volumen von 2 pl bis 50 pl mit einer Toleranz von nicht mehr als $\pm$ 6% bereitgestellt werden, und/oder

**dass** durch den Tintenstrahldruckkopf (31) Klebstofftropfen mit einer Fluggeschwindigkeit von 5 m/s bis 10 m/s mit einer Toleranz von nicht mehr als $\pm$ 15% bereitgestellt werden, und/oder dass der Klebstoff (18) mit einer Auftragstemperatur von 40°C bis 45°C und/oder einer Viskosität von 5 mPas bis 20 mPas, bevorzugt von 7 mPas bis 15 mPas auf die Transferlage aufgetragen wird, und/oder dass ein Abstand zwischen Tintenstrahldruckkopf (31) und Grundkörper (17) beim Aufbringen des Klebstoffs (17) 1 mm nicht überschreitet, und/oder

**dass** eine Relativgeschwindigkeit zwischen Tintenstrahldruckkopf (31) und Grundkörper (17) beim Aufbringen des Klebstoffs (18) 10 m/min bis 30 m/min beträgt.

5. Verfahren nach einem der Ansprüche 3 oder 4,
**dadurch gekennzeichnet,**
**dass** ein Klebstoff (18) der folgenden Volumenzusammensetzung verwendet wird:

| | |
|---|---|
| 2-Phenoxyethylacrylat | 10% - 60%, bevorzugt 25%-50%; |
| 4-(1-Oxo-2-propenyl)-morpholin | 5% - 40%, bevorzugt 10% - 25%; |
| Exo-1,7,7-trimethylbicyclo[2.2.1]-hept-2-ylacrylat | 10% - 40 %, bevorzugt 20%-25%; |
| 2,4,6-Trimethylbenzoyldiphenylphosphinoxid | 5%-35%, bevorzugt 10%-25%; |
| Dipropylenglykoldiacrylat | 1%-20%, bevorzugt 3%-10%; |
| Urethanacrylat oligomer | 1%-20%, bevorzugt 1%-10%. |

6. Verfahren nach einem der Ansprüche 3 bis 5,
**dadurch gekennzeichnet,**
**dass** ein Klebstoff (18) mit einer Dichte von 1 g/ml bis 1,5 g/ml, bevorzugt von 1,0 g/ml bis 1,1 g/ml verwendet wird, und/oder dass der Klebstoff (18) in Form einer optisch wahrnehmbaren Information, insbesondere in Form eines Individualisierungsmerkmals, aufgebracht wird.

7. Verfahren nach einem der vorhergehenden Ansprüche,
**dadurch gekennzeichnet,**
**dass** der Klebstoff (18) in einer vorgegebenen Lagebeziehung zu einer weiteren optisch wahrnehmbaren Information, die von der Transferlage des Grundkörpers (17) ausgebildet wird, aufgebracht wird, insbesondere dass eine Position der weiteren optisch wahrnehmbare Information vor dem Aufbringen des Klebstoffs (18) mittels einer Kamera (39a, b), insbesondere einer Zeilenkamera, erfasst wird und der Klebstoffauftrag in Abhängigkeit von der erfassten Position gesteuert wird.

8. Verfahren nach einem der vorhergehenden Ansprüche,
**dadurch gekennzeichnet,**
**dass** der Klebstoff (18) vor dem Aufbringen der Prägefolie (2) vorgehärtet wird, insbesondere
**dass** das Vorhärten des Klebstoffs (18) 0,02 s bis 0,025 s nach dem Aufbringen des Klebstoffs (18) erfolgt.

9. Verfahren nach Anspruch 8,
**dadurch gekennzeichnet,**
**dass** das Vorhärten des Klebstoffs (18) mit UV-Licht erfolgt, dessen Energie zu mindestens 90% im Wellenlängenbereich zwischen 380 nm und 420 nm abgestrahlt wird, und/oder

**dass** das Vorhärten des Klebstoffs (18) mit einer Brutto-Bestrahlungsstärke von 2 W/cm$^2$ bis 5 W/cm$^2$ und/oder einer Netto-Bestrahlungsstärke von 0,7 W/cm$^2$ bis 2 W/cm$^2$ und/oder einem Energieeintrag in den Klebstoff (18) von 8 mJ/cm$^2$ bis 112 mJ/cm$^2$ erfolgt, und/oder

**dass** das Vorhärten des Klebstoffs (18) mit einer Belichtungszeit von 0,02 s bis 0,056 s erfolgt, und/oder
**dass** sich beim Vorhärten des Klebstoffs (18) dessen Viskosität auf 50 mPas bis 200 mPas erhöht.

**10.** Verfahren nach einem der vorhergehenden Ansprüche,
**dadurch gekennzeichnet,**
**dass** das Aufbringen der Prägefolie (2) auf den Grundkörper (17) 0,2 s bis 1,7 s nach dem Vorhärten des Klebstoffs (18) erfolgt, und/oder dass das Aushärten des Klebstoffs (18) 0,2 s bis 1,7 s nach dem Aufbringen der Prägefolie (2) erfolgt, und/oder dass das Aushärten des Klebstoffs (18) mit UV-Licht erfolgt, dessen Energie zu mindestens 90% im Wellenlängenbereich zwischen 380 nm und 420 nm abgestrahlt wird, und/oder
**dass** das Aushärten des Klebstoffs (18) mit einer Brutto-Bestrahlungsstärke von 12 W/cm$^2$ bis 20 W/cm$^2$ und/oder einer Netto-Bestrahlungsstärke von 4,8 W/cm$^2$ bis 8 W/cm$^2$ und/oder einem Energieeintrag in den Klebstoff von 200 mJ/cm$^2$ bis 900 mJ/cm$^2$, bevorzugt von 200 mJ/cm$^2$ bis 400 mJ/cm$^2$ erfolgt, und/oder dass das Aushärten des Klebstoffs (18) mit einer Belichtungszeit von 0,04 s bis 0,112 s erfolgt, und/oder
**dass** das Ablösen der Trägerlage (21) der Prägefolie (2) 0,2 s bis 1,7 s nach dem Aushärten des Klebstoffs (18) erfolgt.

**11.** Verfahren nach einem der vorhergehenden Ansprüche,
**dadurch gekennzeichnet,**
**dass** ein Grundkörper (17) und/oder eine Prägefolie (2) verwendet wird, die eine Trägerlage (11, 21) aus Polyester, Polyolefin, Polyvinyl, Polyimid, ABS, PET, PP, PE, PVC oder PS mit einer Schichtdicke von 3 $\mu$m bis 100 $\mu$m, bevorzugt von 7 $\mu$m bis 23 $\mu$m, aufweist, und/oder dass ein Grundkörper (17) und/oder eine Prägefolie (2) verwendet wird, deren Transferlage eine Ablöseschicht (12, 22) aus Acrylat-Copolymer, insbesondere aus einem wässrigen Polyurethan-Copolymer, bevorzugt frei von Wachs und/oder Silikon, mit einer Schichtdicke von 0,01 $\mu$m bis 2 $\mu$m, bevorzugt von 0,1 $\mu$m bis 0,5 $\mu$m, aufweist, welche auf einer Oberfläche der Trägerlage (11, 21) angeordnet ist, und/oder dass ein Grundkörper (17) und/oder eine Prägefolie (2) verwendet wird, deren Transferlage eine Lackschicht aus Nitrocellulose, Polyacrylat und/oder Polyurethan-Copolymer mit einer Schichtdicke von 0,1 $\mu$m bis 5 $\mu$m, bevorzugt von 1 $\mu$m bis 2 $\mu$m, und mit zumindest einem Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel aufweist, und/oder
**dass** ein Grundkörper (17) und/oder eine Prägefolie (2) verwendet wird, deren Transferlage zumindest eine Replizierschicht, insbesondere aus Polyacrylat, Polyesteracrylat, Polyurethane und deren Copolymere umfasst, in die ein Oberflächenrelief eingebracht ist, welches ein optisch variables Element, insbesondere ein Hologramm, Kinegram® oder Trustseal®, ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope, Mattstruktur, oder eine lichtbeugende und/oder lichtbrechende und/oder lichtfokussierende Mikro- oder Nanostruktur, eine binäre oder kontinuierliche Fresnelllinsen, eine binäre oder kontinuierliche Fresnel-Freiformfläche, eine Mikroprismenstruktur oder eine Kombinationsstruktur daraus ausbildet, und/oder
**dass** ein Grundkörper (17) und/oder eine Prägefolie (2) verwendet wird, deren Transferlage eine Metallschicht aus Aluminium und/oder Chrom und/oder Silber und/oder Gold und/oder Kupfer mit einer Schichtdicke von 10 nm bis 200 nm, bevorzugt von 10 nm bis 50 nm aufweist, welche auf einer der Trägerlage (11, 21) abgewandten Oberfläche der Lackschicht angeordnet ist, und/oder
**dass** ein Grundkörper (17) und/oder eine Prägefolie (2) verwendet wird, deren Transferlage eine Grundierungsschicht (16, 26) aus Polyacrylaten und/oder Vinylacetocopolymeren mit einer Schichtdicke von 0,1 $\mu$m bis 1,5 $\mu$m, bevorzugt von 0,5 $\mu$m bis 0,8 $\mu$m, aufweist, welche eine der Trägerlage (11, 21) abgewandte Oberfläche der Übertragungslage ausbildet.

**Claims**

**1.** Method for producing a multilayer film (1), comprising the steps:

a) providing a base body (17) with a carrier ply (11) and a transfer ply, which comprises at least one layer;
b) applying an adhesive (18), in particular a UV-curable adhesive, to at least one first partial region of the transfer ply of the base body (17), wherein no adhesive (18) is applied in at least one second partial region of the transfer ply;
c) applying a stamping foil (2), which comprises a carrier ply (21) and a transfer ply, such that the transfer ply of the stamping foil (21) comes into contact with the adhesive (18) applied on the transfer ply of the base body (17) in the at least one first partial region;

d) curing the adhesive (18) by UV irradiation;

e) removing the carrier ply (21) of the stamping foil (2), with the transfer ply of the stamping foil only remaining on the base body (17) in those regions where the adhesive (18) has been applied.

2. Method according to claim 1,
**characterized in that**
a base body (17) and a stamping foil (2) are used which are formed in such a way that a detachment force between the carrier ply (21) of the stamping foil (2) and the transfer ply of the stamping foil (2) is lower than a detachment force between the carrier ply (11) of the base body (17) and the transfer ply of the base body (17); in particular, the detachment force of the carrier ply (21) of the stamping foil (2) and the transfer ply of the stamping foil (2) is at least 15% lower than between the carrier ply (11) of the base body (17) and the transfer ply of the base body (17).

3. Method according to claim 1 or 2,
**characterized in that**
the adhesive (18) is applied by inkjet printing.

4. Method according to claim 3,
**characterized in that**,
for application of the adhesive (18), an inkjet printhead with a resolution of 300 to 1200 nozzles per inch (npi) is used, and/or
for application of the adhesive (18), an inkjet printhead (31) with a nozzle diameter of from 15 $\mu$m to 25 $\mu$m with a tolerance of no more than $\pm$ 5 $\mu$m and/or a nozzle spacing of from 50 $\mu$m to 150 $\mu$m with a tolerance of no more than $\pm$ 5 $\mu$m is used,
and/or
the adhesive (18) is applied to the at least one partial region with a weight per unit area of from 0.5 g/m$^2$ to 20 g/m$^2$ and/or a layer thickness of from 0.5 $\mu$m to 20 $\mu$m, preferably of from 1 $\mu$m to 15 $\mu$m,
and/or
adhesive droplets are provided by the inkjet printhead (31) with a frequency of from 6 kHz to 110 kHz, and/or
adhesive droplets are provided by the inkjet printhead (31) with a volume of from 2 pi to 50 pi with a tolerance of no more than $\pm$ 6%, and/or
adhesive droplets are provided by the inkjet printhead (31) with a flight speed of from 5 m/s to 10 m/s with a tolerance of no more than $\pm$ 15%, and/or
the adhesive (18) is deposited on the transfer ply with a deposition temperature of from 40°C to 45°C and/or a viscosity of from 5 mPas to 20 mPas, preferably of from 7 mPas to 15 mPas, and/or
a spacing between inkjet printhead (31) and base body (17) does not exceed 1mm during the application of the adhesive (17),
and/or
a relative speed between inkjet printhead (31) and base body (17) during the application of the adhesive (18) is from 10 m/min to 30 m/min.

5. Method according to one of claims 3 or 4,
**characterized in that**
an adhesive (18) of the following composition by volume is used:

| | |
|---|---|
| 2-phenoxyethyl acrylate | 10%-60%, preferably 25%-50%; |
| 4-(1-oxo-2-propenyl)morpholine | 5%-40%, preferably 10%-25%; |
| exo-1,7,7-trimethylbicyclo[2.2.1]-hept-2-yl acrylate | 10%-40%, preferably 20%-25%; |
| 2,4,6-trimethylbenzoyldiphenylphosphine oxide | 5%-35%, preferably 10%-25%; |
| dipropylene glycol diacrylate | 1%-20%, preferably 3%-10%; |
| urethane acrylate oligomer | 1%-20%, preferably 1%-10%. |

6. Method according to one of claims 3 to 5,
**characterized in that**
an adhesive (18) with a density of from 1 g/ml to 1.5 g/ml, preferably from 1.0 g/ml to 1.1 g/ml, is used, and/or
the adhesive (18) is applied in the form of an item of optically perceptible information, in particular in the form of an individualization feature.

**7.** Method according to one of the preceding claims,
**characterized in that**
the adhesive (18) is applied in a predefined positional relationship to a further item of optically perceptible information which is formed by the transfer ply of the base body (17), in particular
a position of the further item of optically perceptible information is detected before the application of the adhesive (18) by means of a camera (39a, b), in particular a line scan camera, and the adhesive deposition is controlled depending on the detected position.

**8.** Method according to one of the preceding claims,
**characterized in that**
the adhesive (18) is pre-cured before the application of the stamping foil (2), in particular
the pre-curing of the adhesive (18) is effected 0.02 s to 0.025 s after the application of the adhesive (18).

**9.** Method according to claim 8,
**characterized in that**
the pre-curing of the adhesive (18) is effected with UV light, the energy of which is at least 90% radiated in the wavelength range between 380nm and 420nm, and/or
the pre-curing of the adhesive (18) is effected with a gross irradiance of from 2 W/cm$^2$ to 5 W/cm$^2$ and/or a net irradiance of from 0.7 W/cm$^2$ to 2 W/cm$^2$ and/or an energy input into the adhesive (18) of from 8 mJ/cm$^2$ to 112 mJ/cm$^2$, and/or
the pre-curing of the adhesive (18) is effected with an illumination time of from 0.02 s to 0.056 s, and/or,
during the pre-curing of the adhesive (18), the viscosity thereof increases from 50 mPas to 200 mPas.

**10.** Method according to one of the preceding claims,
**characterized in that**
the application of the stamping foil (2) to the base body (17) is effected 0.2 s to 1.7 s after the pre-curing of the adhesive (18), and/or
the curing of the adhesive (18) is effected 0.2 s to 1.7 s after the application of the stamping foil (2), and/or
the curing of the adhesive (18) is effected with UV light, the energy of which is at least 90% radiated in the wavelength range between 380 nm and 420 nm, and/or
the curing of the adhesive (18) is effected with a gross irradiance of from 12 W/cm$^2$ to 20 W/cm$^2$ and/or a net irradiance of from 4.8 W/cm$^2$ to 8 W/cm$^2$ and/or an energy input into the adhesive of from 200 mJ/cm$^2$ to 900 mJ/cm$^2$, preferably from 200 mJ/cm$^2$ to 400 mJ/cm$^2$, and/or
the curing of the adhesive (18) is effected with an illumination time of from 0.04 s to 0.112 s, and/or
the detachment of the carrier ply (21) of the stamping foil (2) is effected 0.2 s to 1.7 s after the curing of the adhesive (18).

**11.** Method according to one of the preceding claims,
**characterized in that**
a base body (17) and/or a stamping foil (2) is used which has a carrier ply (11, 21) made of polyester, polyolefin, polyvinyl, polyimide, ABS, PET, PP, PE, PVC or PS with a layer thickness of from 3 $\mu$m to 100 $\mu$m, preferably of from 7 $\mu$m to 23 $\mu$m, and/or
a base body (17) and/or a stamping foil (2) is used, the transfer ply of which has a detachment layer (12, 22) made of acrylate copolymer, in particular of an aqueous polyurethane copolymer, preferably free of wax and/or silicone, with a layer thickness of from 0.01 $\mu$m to 2 $\mu$m, preferably of from 0.1 $\mu$m to 0.5 $\mu$m, which is arranged on a surface of the carrier ply (11, 21), and/or
a base body (17) and/or a stamping foil (2) is used, the transfer ply of which has a varnish layer made of nitrocellulose, polyacrylate and/or polyurethane copolymer with a layer thickness of from 0.1 $\mu$m to 5 $\mu$m, preferably of from 1 $\mu$m to 2 $\mu$m, and having at least one colorant, in particular coloured or uncoloured pigments and/or effect pigments, thin film coating systems, cholesteric liquid crystals, dyes and/or metallic or non-metallic nanoparticles, and/or
a base body (17) and/or a stamping foil (2) is used, the transfer ply of which comprises at least one replication layer, in particular made of polyacrylate, polyester acrylate, polyurethanes and copolymers thereof, into which a surface relief is introduced which forms an optically variable element, in particular a hologram, Kinegram® or Trustseal®, a preferably linear or crossed sinusoidal diffraction grating, a linear or crossed single layer or multi-layer rectangular grating, a zero-order diffraction structure, an asymmetric relief structure, a blaze grating, a preferably isotropic or anisotropic, matte structure, or a light-diffracting and/or light-refractive and/or light-focusing microstructure or nanostructure, a binary or continuous Fresnel lens, a binary or continuous Fresnel free-form surface, a microprism structure or a combination structure thereof, and/or

a base body (17) and/or a stamping foil (2) is used, the transfer ply of which has a metal layer made of aluminium and/or chromium and/or silver and/or gold and/or copper with a layer thickness of from 10 nm to 200 nm, preferably of from 10 nm to 50 nm, which is arranged on a surface of the varnish layer facing away from the carrier plies (11, 21), and/or

a base body (17) and/or a stamping foil (2) is used, the transfer ply of which has a primer layer (16, 26) made of polyacrylates and/or vinyl acetate copolymers with a layer thickness of from 0.1 $\mu$m to 1.5 $\mu$m, preferably of from 0.5 $\mu$m to 0.8 $\mu$m, which forms a surface of the transfer ply facing away from the carrier plies (11, 21).

## Revendications

1.  Procédé de fabrication d'une feuille multicouche (1), comportant les étapes de :

    a) mise à disposition d'un corps de base (17) avec une strate de support (11) et une strate de transfert qui comprend au moins une couche ;
    b) dépôt d'un adhésif (18) en particulier durcissable aux UV sur au moins une première zone partielle de la strate de transfert du corps de base (17), dans lequel dans au moins une deuxième zone partielle de la strate de transfert, aucun adhésif (18) n'est déposé ;
    c) dépôt d'une feuille d'estampage (2) qui comprend une strate de support (11) et une strate de transfert, de sorte que la strate de transfert de la feuille d'estampage (21) vienne en contact dans au moins une première zone partielle avec l'adhésif (18) appliqué sur la strate de transfert du corps de base (17) ;
    d) durcissement de l'adhésif (18) par irradiation aux UV ;
    e) retrait de la strate de support (11, 21) de la feuille d'estampage (2), la strate de transfert de la feuille d'estampage restant sur le corps de base (17) uniquement à l'endroit où l'adhésif (18) est appliqué.

2.  Procédé selon la revendication 1,
    **caractérisé en ce**
    **qu'**un corps de base (17) et une feuille d'estampage (2) sont utilisés, qui sont conçus de telle sorte qu'une force de détachement entre la strate de support (21) de la feuille d'estampage (2) et la strate de transfert de la feuille d'estampage (2) soit plus faible qu'une force de détachement entre la strate de support (11) du corps de base (17) et la strate de transfert du corps de base (17), en particulier la force de détachement de la strate de support (21) de la feuille d'estampage (2) et la strate de transfert de la feuille d'estampage (2) sont inférieures d'au moins 15 % à celle entre la strate de support (11) du corps de base (17) et la strate de transfert du corps de base (17) .

3.  Procédé selon la revendication 1 ou 2,
    **caractérisé en ce**
    **que** l'adhésif (18) est déposé par impression à jet d'encre.

4.  Procédé selon la revendication 3,
    **caractérisé en ce**
    **que**, pour le dépôt de l'adhésif (18), une tête d'impression à jet d'encre avec une résolution de 300 à 1200 buses d'application par pouce (npi, nozzles per inch) est utilisée, et/ou
    **que**, pour le dépôt de l'adhésif (18), une tête d'impression à jet d'encre (31) présentant un diamètre de buse de 15 $\mu$m à 25 $\mu$m avec une tolérance non supérieure à $\pm$ 5 $\mu$m et/ou un intervalle entre les buses de 50 $\mu$m à 150 $\mu$m avec une tolérance non supérieure à $\pm$ 5 $\mu$m est utilisée, et/ou
    **que** l'adhésif (18) est appliqué avec un grammage de 0,5 g/m$^2$ à 20 g/m$^2$ et/ou une épaisseur de couche de 0,5 $\mu$m à 20 $\mu$m, de préférence de 1 $\mu$m à 15 $\mu$m, sur l'au moins une zone partielle, et/ou
    **que** des gouttes d'adhésif sont mises à disposition par la tête d'impression à jet d'encre (31) à une fréquence de 6 kHz à 110 kHz, et/ou
    **que** des gouttes d'adhésif sont mises à disposition par la tête d'impression à jet d'encre (31) en un volume de 2 pl à 50 pl avec une tolérance non supérieure à $\pm$ 6 %, et/ou
    **que** des gouttes d'adhésif sont mises à disposition par la tête d'impression à jet d'encre (31) en une vitesse aérodynamique de 5 m/s à 10 m/s avec une tolérance non supérieure à $\pm$ 15 %, et/ou
    **que** l'adhésif (18) est appliqué avec une température d'application de 40 °C à 45 °C et/ou à une viscosité de 5 mPas à 20 mPas, de préférence de 7 mPas à 15 mPas sur la strate de transfert, et/ou
    **qu'**un intervalle entre la tête d'impression à jet d'encre (31) et le corps de base (17) ne dépasse pas 1 mm lors du dépôt de l'adhésif (17), et/ou

**qu'**une vitesse relative entre la tête d'impression à jet d'encre (31) et le corps de base (17) est de 10 m/min à 30 m/min lors du dépôt de l'adhésif (18).

5. Procédé selon l'une des revendications 3 ou 4,
   **caractérisé en ce**
   **qu'**un adhésif (18) de la composition suivante en volume est utilisé :

   2-phénoxyéthylacrylate : 10 % à 60 %, de préférence 25 % à 50 % ;
   4-(1-oxo-2-propényl)-morpholine : 5 % à 40 %, de préférence 10 % à 25 % ;
   exo-1,7,7-triméthylbicyclo[2.2.1]-hept-2-ylacrylate : 10 % à 40 %, de préférence 20 % à 25 % ;
   oxyde de 2,4,6-triméthylbenzoyldiphénylphosphine : 5 % à 35 %, de préférence 10 % à 25 % ;
   dipropylèneglycoldiacrylate ; 1 % à 20 %, de préférence 3 % à 10 % ;
   oligomère acrylate d'uréthane : 1 % à 20 %, de préférence 1 % à 10 %.

6. Procédé selon l'une des revendications 3 à 5,
   **caractérisé en ce**
   **qu'**un adhésif (18) présentant une densité de 1 g/ml à 1,5 g/ml, de préférence 1,0 g/ml à 1,1 g/ml est utilisé, et/ou
   **que** l'adhésif (18) est déposé sous la forme d'une information perceptible optiquement, en particulier sous la forme d'une caractéristique d'individualisation.

7. Procédé selon l'une des revendications précédentes,
   **caractérisé en ce**
   **que** l'adhésif (18) est déposé dans une relation de strate prédéfinie avec une autre information perceptible optiquement, qui est constituée de la strate de transfert du corps de base (17), en particulier
   **qu'**une position de l'autre information perceptible optiquement avant le dépôt de l'adhésif (18) est captée au moyen d'une caméra (39a, b), en particulier d'une caméra linéaire, et l'application de l'adhésif est commandée en fonction de la position saisie.

8. Procédé selon l'une des revendications précédentes,
   **caractérisé en ce**
   **que** l'adhésif (18) est prédurci avant le dépôt de la feuille d'estampage (2), en particulier
   **que** le prédurcissement de l'adhésif (18) s'effectue 0,02 s à 0,025 s après le dépôt de l'adhésif (18) .

9. Procédé selon la revendication 8,
   **caractérisé en ce**
   **que** le prédurcissement de l'adhésif (18) s'effectue avec une lumière UV, dont l'énergie est émise à au moins 90 % dans la plage de longueur d'onde entre 380 nm et 420 nm, et/ou
   **que** le prédurcissement de l'adhésif (18) s'effectue avec une force d'irradiation brute de 2 W/cm$^2$ à 5 W/cm$^2$ et/ou une force d'irradiation nette de 0,7 W/cm$^2$ à 2 W/cm$^2$ et/ou un apport d'énergie dans l'adhésif (18) de 8 mJ/cm$^2$ à 112 mJ/cm$^2$, et/ou
   **que** le prédurcissement de l'adhésif (18) s'effectue en un temps d'exposition de 0,02 s à 0,056 s, et/ou
   **que**, lors du prédurcissement de l'adhésif (18), sa viscosité est augmentée de 50 mPas à 200 mPas.

10. Procédé selon l'une des revendications précédentes,
    **caractérisé en ce**
    **que** le dépôt de la feuille d'estampage (2) sur le corps de base (17) s'effectue 0,2 s à 1,7 s après le prédurcissement de l'adhésif (18), et/ou
    **que** le durcissement de l'adhésif (18) s'effectue 0,2 s à 1,7 s après le dépôt de la feuille d'estampage (2), et/ou
    **que** le durcissement de l'adhésif (18) s'effectue avec une lumière UV dont l'énergie est émise à au moins 90 % dans la plage de longueur d'onde entre 380 nm et 420 nm, et/ou
    **que** le durcissement de l'adhésif (18) s'effectue avec une force d'irradiation brute de 12 W/cm$^2$ à 20 W/cm$^2$ et/ou une force d'irradiation nette de 4,8 W/cm$^2$ à 8 W/cm$^2$ et/ou un apport d'énergie dans l'adhésif de 200 mJ/cm$^2$ à 900 mJ/cm$^2$, de préférence de 200 mJ/cm$^2$ à 400 mJ/cm$^2$, et/ou
    **que** le durcissement de l'adhésif (18) s'effectue en un temps d'exposition de 0,04 s à 0,112 s, et/ou
    **que** le détachement de la strate de support (21) de la feuille d'estampage (2) s'effectue 0,2 s à 1,7 s après le durcissement de l'adhésif (18).

11. Procédé selon l'une des revendications précédentes,

**caractérisé en ce**

**que** l'on utilise un corps de base (17) et/ou une feuille d'estampage (2) qui présente une strate de support (11, 21) en polyester, polyoléfine, polyvinyle, polyimide, ABS, PET, PP, PE, PVC ou PS avec une épaisseur de couche de 3 $\mu$m à 100 $\mu$m, de préférence de 7 $\mu$m à 23 $\mu$m, et/ou

**que** l'on utilise un corps de base (17) et/ou une feuille d'estampage (2) dont la strate de transfert présente une couche de détachement (12, 22) en copolymère d'acrylate, en particulier en un copolymère de polyuréthane aqueux, de préférence dépourvu de cire et/ou de silicone, ayant une épaisseur de couche de 0,01 $\mu$m à 2 $\mu$m, de préférence de 0,1 $\mu$m à 0,5 $\mu$m qui est disposée sur une surface de la strate de support (11, 21), et/ou

**que** l'on utilise un corps de base (17) et/ou une feuille d'estampage (2) dont la strate de transfert présente une couche de laque de nitrocellulose, de polyacrylate et/ou de copolymère de polyuréthane ayant une épaisseur de couche de 0,1 $\mu$m à 5 $\mu$m, de préférence de 1 $\mu$m à 2 $\mu$m, et au moins un colorant, en particulier des pigments colorés ou non colorés et/ou des pigments à effet, des systèmes de film en couche mince, des cristaux liquides cholestériques, des colorants et/ou des nanoparticules métalliques ou non métalliques, et/ou

**que** l'on utilise un corps de base (17) et/ou une feuille d'estampage (2) dont la strate de transfert comprend au moins une couche de réplication, en particulier en polyacrylate, polyesteracrylate, polyuréthane et leurs copolymères dans laquelle un relief de surface est inséré, qui forme un élément variable optiquement, en particulier un hologramme, un Kinegram® ou un Trustseal®, un réseau de diffraction sinusoïdal de préférence linéaire ou croisé, un réseau rectangulaire linéaire ou croisé à une ou plusieurs étapes, une structure de diffraction d'ordre zéro, une structure en relief asymétrique, un réseau blazé, une structure matte de préférence isotrope ou anisotrope ou une micro-ou nanostructure diffractive et/ou réfractive et/ou focalisant la lumière, une lentille de Fresnel binaire ou continue, une surface à forme libre de Fresnel binaire ou continue, une structure à microprismes ou une structure combinée de ceux-ci, et/ou

**que** l'on utilise un corps de base (17) et/ou une feuille d'estampage (2) dont la strate de transfert présente une couche métallique en aluminium et/ou en chrome et/ou en argent et/ou en or et/ou en cuivre avec une épaisseur de couche de 10 nm à 200 nm, de préférence de 10 nm à 50 nm, qui est disposée sur une surface détournée de la strate de support (11, 21) de la couche de laque, et/ou

**que** l'on utilise un corps de base (17) et/ou une feuille d'estampage (2) dont la strate de transfert présente une couche d'apprêt (16, 26) en polyacrylate et/ou copolymères d'acétate de vinyle ayant une épaisseur de couche de 0,1 $\mu$m à 1,5 $\mu$m, de préférence de 0,5 $\mu$m à 0,8 $\mu$m qui constitue une surface détournée de la strate de support (11, 21) de la strate de transmission.

Fig. 1

Fig. 2

Fig. 3

22

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- WO 2007048563 A2